# EUROPEAN PATENT SPECIFICATION

(11) **EP 2 356 577 B1**
(45) Date of publication and mention of the grant of the patent: **14.08.2019**
(21) Application number: 09826977.2
(22) Date of filing: 17.11.2009
(51) Int. Cl.: H04L 29/08, H04W 4/20, H04W 4/021, H04L 12/701, H04W 4/02, H04L 29/12, H04W 40/20

(54) **REQUEST ROUTING AND UPDATING ROUTING INFORMATION UTILIZING CLIENT LOCATION INFORMATION**
ANFRAGENROUTING UND AKTUALISIERUNG VON ROUTINGINFORMATIONEN MITHILFE VON KUNDENSTANDORTINFORMATIONEN
ACHEMINEMENT DE REQUÊTES ET MISE À JOUR D'INFORMATIONS D'ACHEMINEMENT À L'AIDE DES INFORMATIONS D'EMPLACEMENT DU CLIENT

(30) Priority: 17.11.2008 US 272687; 17.11.2008 US 272683
(43) Date of publication of application: 17.08.2011
(60) Divisional application: 19184826.6
(73) Proprietor: Amazon Technologies, Inc., Reno, NV 89507 (US)
(72) Inventor: RICHARDSON, David, R., Seattle, WA 98144 (US); MARSHALL, Bradley, E., Seattle, WA 98144 (US); SIVASUBRAMANIAN, Swaminathan, Seattle, WA 98144 (US); CORMIE, John, Seattle, WA 98144 (US); PATEL, Imran, S., Seattle, WA 98144 (US); REDMAN, Benjamin, W.S., Seattle, WA 98144 (US); SHEEHAN, Richard, A., Seattle, WA 98144 (US)
(74) Representative: D Young & Co LLP
(86) International application number: PCT/US2009/064816
(87) International publication number: WO 2010/057192

(56) References cited:
- WO-A2-01/45349
- US-A1- 2001 052 016
- US-A1- 2003 009 591
- US-A1- 2004 083 307
- US-A1- 2006 233 155
- US-A1- 2008 008 089
- US-B2- 7 103 645

## Description

### BACKGROUND

Generally described, computing devices and communication networks can be utilized to exchange information. In a common application, a computing device can request content from another computing device via the communication network. For example, a user at a personal computing device can utilize a software browser application to request a Web page from a server computing device via the Internet. In such embodiments, the user computing device can be referred to as a client computing device and the server computing device can be referred to as a content provider.

Content providers are generally motivated to provide requested content to client computing devices often with consideration of efficient transmission of the requested content to the client computing device and/or consideration of a cost associated with the transmission of the content. For larger scale implementations, a content provider may receive content requests from a high volume of client computing devices which can place a strain on the content provider's computing resources. Additionally, the content requested by the client computing devices may have a number of components, which can further place additional strain on the content provider's computing resources.

With reference to an illustrative example, a requested Web page, or original content, may be associated with a number of additional resources, such as images or videos, which are to be displayed with the Web page. In one specific embodiment, the additional resources of the Web page are identified by a number of embedded resource identifiers, such as uniform resource locators ("URLs"). In turn, software on the client computing devices typically processes embedded resource identifiers to generate requests for the content. Often, the resource identifiers associated with the embedded resources reference a computing device associated with the content provider such that the client computing device would transmit the request for the additional resources to the referenced content provider computing device. Accordingly, in order to satisfy a content request, the content provider would provide client computing devices data associated with the Web page as well as the data associated with the embedded resources.

Some content providers attempt to facilitate the delivery of requested content, such as Web pages and/or resources identified in Web pages, through the utilization of a content delivery network ("CDN") service provider. A CDN server provider typically maintains a number of computing devices in a communication network that can maintain content from various content providers. In turn, content providers can instruct, or otherwise suggest to, client computing devices to request some, or all, of the content provider's content from the CDN service provider's computing devices.

As with content providers, CDN service providers are also generally motivated to provide requested content to client computing devices often with consideration of efficient transmission of the requested content to the client computing device and/or consideration of a cost associated with the transmission of the content. Accordingly, CDN service providers often consider factors such as latency of delivery of requested content in order to meet service level agreements or to generally improve the quality of delivery service.

US 2001/052016 discloses a system and method for balancing load on virtual servers managed by a server array controllers at separate data centers that are geographically distributed. US 2004/0083307 discloses an apparatus that selects a location of a service on the internet according to the user's geo-location. WO 01/45349 discloses a scalable domain name service. US 2008/0008089 discloses a routing mechanism operable in a distributed networking environment.

### SUMMARY

The subject matter claimed herein is defined in the claims.

### DESCRIPTION OF THE DRAWINGS

The foregoing aspects and many of the attendant advantages of this invention will become more readily appreciated as the same become better understood by reference to the following detailed description, when taken in conjunction with the accompanying drawings, wherein:
Figure 1 is a block diagram illustrative of content delivery environment including a number of client computing devices, a content provider, and a content delivery network service provider;
Figure 2 is a block diagram of the content delivery environment of Figure 1 illustrating the registration of a content provider with a content delivery service provider;
Figure 3 is a block diagram of the content delivery environment of Figure 1 illustrating the generation and processing of a content request from a client computing device to a content provider;
Figures 4A-4B are block diagrams of the content delivery environment of Figure 1 illustrating one embodiment of the generation and processing of a DNS query corresponding to an embedded resource from a client computing device to a content delivery network service provider and the subsequent generation and processing of DNS queries corresponding to a first alternative resource identifier from a client computing device to a content delivery network;
Figure 5 is a block diagram of the content delivery environment of Figure 1 illustrating another embodiment of the generation and processing of a DNS query corresponding to an embedded resource from a client computing device to a content delivery network service provider;
Figure 6 is a block diagram of the content delivery environment of Figure 1 illustrating the generation and processing of embedded resource requests from a client computing device to a content delivery network service provider;
Figure 7 is a flow diagram illustrative of a request routing routine implemented by a content delivery network service provider utilizing query IP address to location-based identifier mappings to process a resource request; and
Figure 8 is a flow diagram illustrative a request routing subroutine implemented by a content delivery network service provider in the illustrative flow diagram of Figure 7 for determining a network point of presence for servicing a resource request based on an obtained location-based identifier.

### DETAILED DESCRIPTION

Generally described, the present disclosure is directed to routing of a DNS query from a client computing device corresponding to content requests by a network resource, such as a content delivery network ("CDN") service provider. The processing of a DNS query by a CDN service provider is generally referred to as request routing. Specifically, aspects of the disclosure will be described with regard to the routing of a client computing device DNS query within a CDN service provider domain as a function of client location information associated with the client computing device. In one embodiment, a CDN service provider utilizes a query IP address to location-based identifier mappings to select components of a CDN network to provide the requested resource. The CDN network component can be selected by identifying a client computing device's location and attempting to improve performance associated with the request routing by transmitting requested resources from a CDN network component in a destination associated with the client's location. Other aspects of the disclosure are directed to collecting performance data associated with resolving the DNS query and updating routing information associated with client location information based on the performance data. Although various aspects of the disclosure will be described with regard to illustrative examples and embodiments, one skilled in the art will appreciate that the disclosed embodiments and examples should not be construed as limiting.

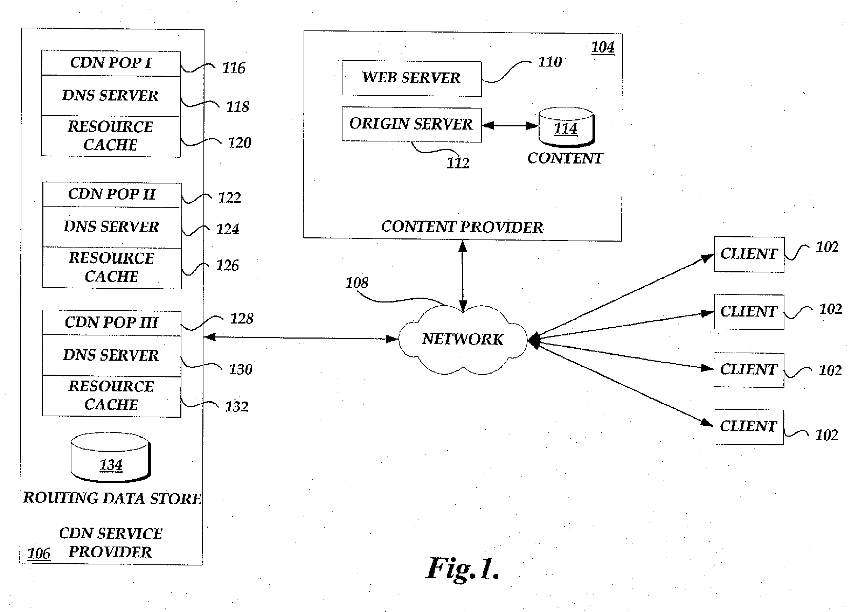

Figure 1 is a block diagram illustrative of content delivery environment 100 for the management and processing of content requests. As illustrated in Figure 1, the content delivery environment 100 includes a number of client computing devices 102 (generally referred to as clients) for requesting content from a content provider and/or a CDN service provider. In an illustrative embodiment, the client computing devices 102 can correspond to a wide variety of computing devices including personal computing devices, laptop computing devices, hand-held computing devices, terminal computing devices, mobile devices, wireless devices, various electronic devices and appliances and the like. In an illustrative embodiment, the client computing devices 102 include necessary hardware and software components for establishing communications over a communication network 108, such as a wide area network or local area network. For example, the client computing devices 102 may be equipped with networking equipment and browser software applications that facilitate communications via the Internet or an intranet.

Although not illustrated in Figure 1, each client computing device 102 utilizes some type of local DNS resolver component, such as a DNS name server, that generates the DNS queries attributed to the client computing device. In one embodiment, the local DNS resolver component may be provided by an enterprise network to which the client computing device 102 belongs. In another embodiment, the local DNS resolver component may be provided by an Internet Service Provider (ISP) that provides the communication network connection to the client computing device 102.

The content delivery environment 100 can also include a content provider 104 in communication with the one or more client computing devices 102 via the communication network 108. The content provider 104 illustrated in Figure 1 corresponds to a logical association of one or more computing devices associated with a content provider. Specifically, the content provider 104 can include a web server component 110 corresponding to one or more server computing devices for obtaining and processing requests for content (such as Web pages) from the client computing devices 102. The content provider 104 can further include an origin server component 112 and associated storage component 114 corresponding to one or more computing devices for obtaining and processing requests for network resources from the CDN service provider. One skilled in the relevant art will appreciate that the content provider 104 can be associated with various additional computing resources, such additional computing devices for administration of content and resources, DNS name servers, and the like. For example, although not illustrated in Figure 1, the content provider 104 can be associated with one or more DNS name server components that are operative to receive DNS queries related to registered domain names associated with the content provider. The one or more DNS name servers can be authoritative to resolve client computing device DNS queries corresponding to the registered domain names of the content provider 104. A DNS name server component is considered to be authoritative to a DNS query if the DNS name server can resolve the query by providing a responsive IP address.

With continued reference to Figure 1, the content delivery environment 100 can further include a CDN service provider 106 in communication with the one or more client computing devices 102 and the content providers 104 via the communication network 108. The CDN service provider 106 illustrated in Figure 1 corresponds to a logical association of one or more computing devices associated with a CDN service provider. Specifically, the CDN service provider 106 can include a number of Point of Presence ("POP") locations 116, 122, 128 that correspond to nodes on the communication network 108. Each POP 116, 122, 128 includes a DNS component 118, 124, 130 made up of a number of DNS server computing devices for resolving DNS queries from the client computers 102. Each POP 116, 122, 128 also includes a resource cache component 120, 126, 132 made up of a number of cache server computing devices for storing resources from content providers and transmitting various requested resources to various client computers.

Still further, the CDN service provider 106 includes a routing data store 134 for maintaining information regarding query IP address to location-based identifier mappings, as well as confidence factors associated with those mappings, such as disclosed in U.S. Application Serial No. 11/771,679 filed on June 29, 2007, and entitled "Mapping Attributes to Network Addresses,". In some embodiments, the location-based identifiers can correspond to locations directly determined based on physical locations or logical locations associated with the origin of the DNS query. In addition or alternatively, the location-based identifier can be inferred based on associating a relative location to known locations. For example, the location-based identifier can be attributed to known locations of POPs (corresponding to the CDN service provider) based on measured latency information associated with request routing between the client computing device or its local DNS resolver and these POPs. The measured latency information can be premeasured, such as through testing procedures or previously observed request routing behavior. Alternatively, the measured latency information can be dynamically measured in a real time basis or semi-real time basis.

The routing data store 134 can also maintain additional location mapping information such as mappings of the location-based identifiers to regional CDN destination identifiers. Even further, the location mapping data store 134 can include information identifying a set of POPs associated with each CDN destination identifier. Yet further, the routing data store 134 can include user profile information from which alternative user location information may be obtained. Yet still further, the routing data store 134 can include content provider routing criteria associated with a content provider identifier (or origin identifier), such as regional service plan information or other routing criteria, utilized by the CDN service provider 106 to route content requests. Yet even further, the routing data store 134 can also maintain performance data associated with processing requests.

In an illustrative embodiment, the routing data store 134 corresponds to a central data store accessible by the POPs 116, 122, 128, such as via a Web service. In another embodiment, each POP 116, 122, 128 can maintain a local version of a routing data store 134 for utilization in request routing as will be explained in greater detail. Additionally, although the routing data store 134 is illustrated as a single data store, one skilled in the relevant art will appreciate that routing data store 134 may correspond to one or more data stores and may be implemented in a distributed manner.

The DNS components 118, 124 and 130 and the resource cache components 120, 126 132 may further include additional software and/or hardware components that facilitate communications including, but not limited, load balancing or load sharing software/hardware components.

In an illustrative embodiment, the DNS component 118, 124, 130 and resource cache component 120, 126, 132 are considered to be logically grouped, regardless of whether the components, or portions of the components, are physically separate. Additionally, although the POPs 116, 122, 128 are illustrated in Figure 1 as logically associated with the CDN service provider 106, the POPs will be geographically distributed throughout the communication network 108 in a manner to best serve various demographics of client computing devices 102. Additionally, one skilled in the relevant art will appreciate that the CDN service provider 106 can be associated with various additional computing resources, such additional computing devices for administration of content and resources, and the like.

One skilled in the relevant art will appreciate that the components and configurations provided in Figure 1 are illustrative in nature. Accordingly, additional or alternative components and/or configurations, especially regarding the additional components, systems and subsystems for facilitating communications may be utilized.

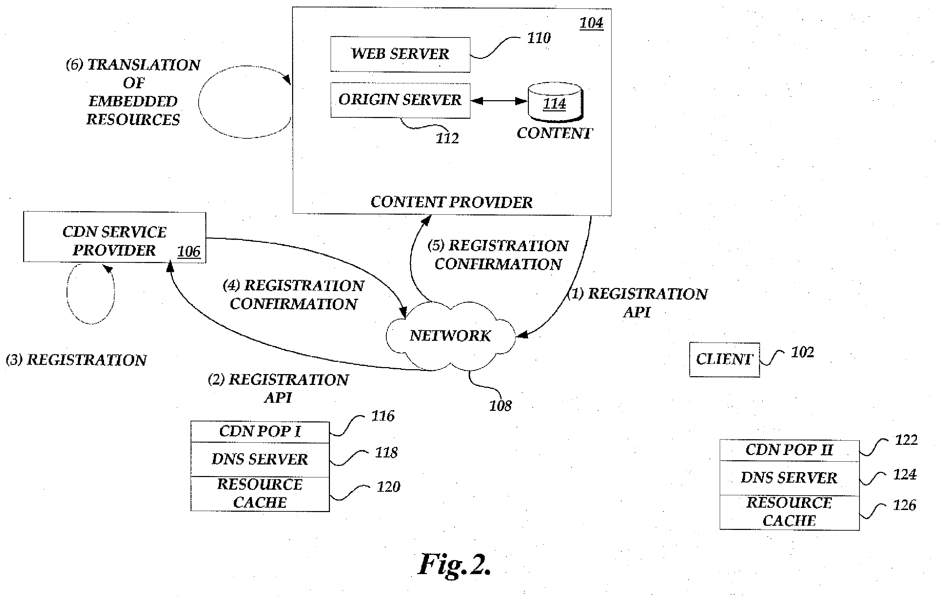

With reference now to Figures 2-6, the interaction between various components of the content delivery environment 100 of Figure 1 will be illustrated. For purposes of the example, however, the illustration has been simplified such that many of the components utilized to facilitate communications are not shown. One skilled in the relevant art will appreciate that such components can be utilized and that additional interactions would accordingly occur within the scope defined by the appended claims.

With reference to Figure 2, an illustrative interaction for registration of a content provider 104 with the CDN service provider 106 will be described. As illustrated in Figure 2, the CDN content registration process begins with registration of the content provider 104 with the CDN service provider 106. In an illustrative embodiment, the content provider 104 utilizes a registration application program interface ("API") to register with the CDN service provider 106 such that the CDN service provider 106 can provide content on behalf of the content provider 104. The registration API includes the identification of the origin server 112 of the content provider 104 that will provide requested resources to the CDN service provider 106. Additionally, as will be explained in greater detail below, the content provider 104 can also provide additional information, such as regional service plan information or other routing criteria, utilized by the CDN service provider 106 to route content requests. In one embodiment, the routing criteria can include the specification of a particular regional service plan, which may limit the regions from which content requests may be resolved by the CDN service provider 106. In another embodiment, the routing criteria can include a selection by the content provider 104 that the CDN service provider 106 should attempt to service specific resource requests from a particular regional destination or POP or from a particular distribution of regional destinations or POPs.

One skilled in the relevant art will appreciate that upon identification of appropriate origin servers 112, the content provider 104 can begin to direct requests for content from client computing devices 102 to the CDN service provider 106. Specifically, in accordance with DNS routing principles, a client computing device request corresponding to a resource identifier would eventually be directed toward a POP 116, 122, 128 associated with the CDN service provider 106. In the event that the resource cache component 120, 126, 132 of a selected POP does not have a copy of a resource requested by a client computing device 102, the resource cache component will request the resource from the origin server 112 previously registered by the content provider 104.

With continued reference to Figure 2, upon receiving the registration API, the CDN service provider 106 obtains and processes the registration information. In an illustrative embodiment, the CDN service provider 106 can then generate additional information that will be used by the client computing devices 102 as part of the content requests. The additional information can include, without limitation, content provider identifiers, such as content provider identification codes or origin server identifiers, executable code for processing resource identifiers, such as script-based instructions, and the like. One skilled in the relevant art will appreciate that various types of additional information may be generated by the CDN service provider 106 and that the additional information may be embodied in any one of a variety of formats.

The CDN service provider 106 returns an identification of applicable domains for the CDN service provider (unless it has been previously provided) and any additional information to the content provider 104. In turn, the content provider 104 can then process the stored content with content provider specific information. In one example, as illustrated in Figure 2, the content provider 104 translates resource identifiers originally directed toward a domain of the origin server 112 to a domain corresponding to the CDN service provider. The translated URLs are embedded into requested content in a manner such that DNS queries for the translated URLs will resolve to a DNS server corresponding to the CDN service provider 106 and not a DNS server corresponding to the content provider 104. Although the translation process is illustrated in Figure 2, in some embodiments, the translation process may be omitted in a manner described in greater detail below.

Generally, the identification of the resources originally directed to the content provider 104 will be in the form of a resource identifier that can be processed by the client computing device 102, such as through a browser software application. In an illustrative embodiment, the resource identifiers can be in the form of a uniform resource locator ("URL"). Because the resource identifiers are included in the requested content directed to the content provider, the resource identifiers can be referred to generally as the "content provider URL." For purposes of an illustrative example, the content provider URL can identify a domain of the content provider 104 (e.g., contentprovider.com), a name of the resource to be requested (e.g., "resource.xxx") and a path where the resource will be found (e.g., "path"). In this illustrative example, the content provider URL has the form of:

### http://www.contentprovider.com/path/resource.xxx

During an illustrative translation process, the content provider URL is modified such that requests for the resources associated with the translated URLs resolve to a POP associated with the CDN service provider 106. In one embodiment, the translated URL identifies the domain of the CDN service provider 106 (e.g., "cdnprovider.com"), the same name of the resource to be requested (e.g., "resource.xxx") and the same path where the resource will be found (e.g., "path"). Additionally, the translated URL can include additional processing information (e.g., "additional information"). Specifically, as set forth above, in one illustrative embodiment, the additional information can include a content provider identifier. Additionally, the translated URL can include any additional information utilized by the CDN service provider during the request routing information, including, but not limited to, service plan information, file identifiers, and the like. Such information may be included in the modified URL or may be omitted from the translated URL and obtained by the CDN service provider 106 during the request routing process, such as by a lookup according to a content provider identifier. The translated URL would have the form of:

### http://additional_information.cdnprovider.com/path/resource.xxx

In another embodiment, the information associated with the CDN service provider 106 is included in the modified URL, such as through prepending or other techniques, such that the translated URL can maintain all of the information associated with the original URL. In this embodiment, the translated URL would have the form of: http://additional_information.cdnprovider.com/www.contentprovider.com/path/resource.xxx

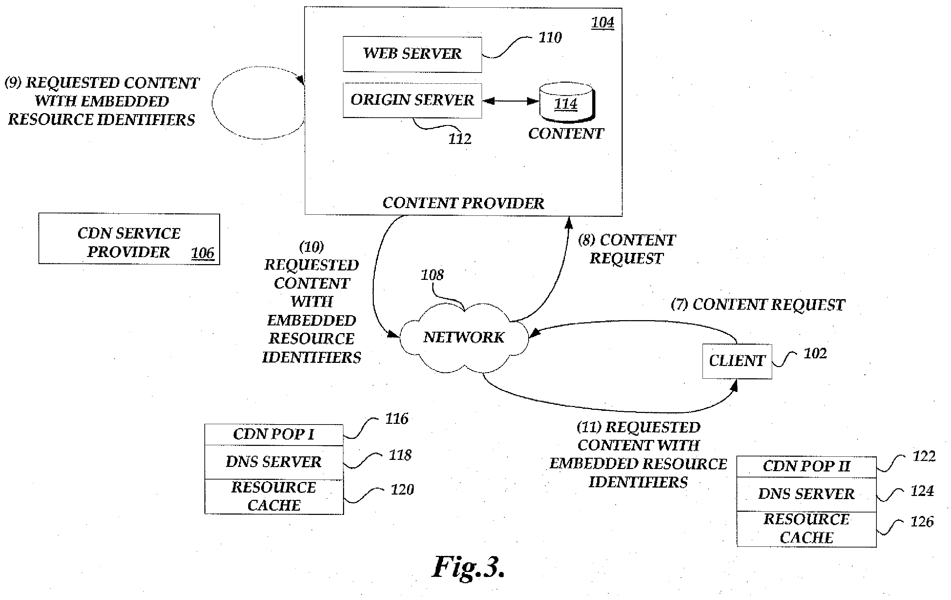

With reference now to Figure 3, after completion of the registration and translation processes illustrated in Figure 2, a client computing device 102 subsequently generates a content request that is received and processed by the content provider 104, such as through the Web server 110. In accordance with an illustrative embodiment, the request for content can be in accordance with common network protocols, such as the hypertext transfer protocol ("HTTP"). Upon receipt of the content request, the content provider 104 identifies the appropriate responsive content. In an illustrative embodiment, the requested content can correspond to a Web page that is displayed on the client computing device 102 via the processing of information, such as hypertext markup language ("HTML"), extensible markup language ("XML"), and the like. The requested content can also include a number of embedded resource identifiers, described above, that corresponds to resource objects that should be obtained by the client computing device 102 as part of the processing of the requested content. The embedded resource identifiers can be generally referred to as original resource identifiers or original URLs.

Upon receipt of the requested content, the client computing device 102, such as through a browser software application, begins processing any of the markup code included in the content and attempts to acquire the resources identified by the embedded resource identifiers. Accordingly, the first step in acquiring the content corresponds to the issuance, by the client computing device 102 (through its local DNS resolver), of a DNS query for the original URL resource identifier that results in the identification of a DNS server authoritative to the "." and the "com" portions of the translated URL. After processing the "." and "com" portions of the embedded URL, the client computing device 102 then issues a DNS query for the resource URL that results in the identification of a DNS server authoritative to the ".cdnprovider" portion of the embedded URL. The issuance of DNS queries corresponding to the "." and the "com" portions of a URL are well known and have not been illustrated.

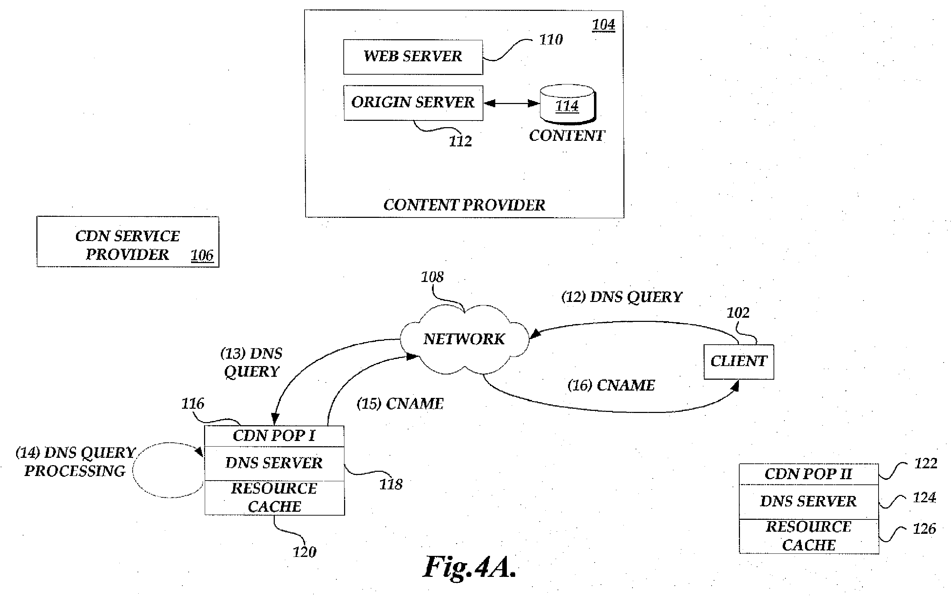

With reference now to Figures 4A, in an illustrative embodiment, the successful resolution of the "cdnprovider" portion of the original URL identifies a network address, such as an IP address, of a DNS server associated with the CDN service provider 106. In one embodiment, the IP address can be a specific network address unique to a DNS server component of a POP. In another embodiment, the IP address can be shared by one or more POPs. In this embodiment, a further DNS query to the shared IP address utilizes a one-to-many network routing schema, such as anycast, such that a specific POP will receive the request as a function of network topology. For example, in an anycast implementation, a DNS query issued by a client computing device 102 to a shared IP address will arrive at a DNS server component logically having the shortest network topology distance, often referred to as network hops, from the client computing device. The network topology distance does not necessarily correspond to geographic distance. However, in some embodiments, the network topology distance can be inferred to be the shortest network distance between a client computing device 102 and a POP.

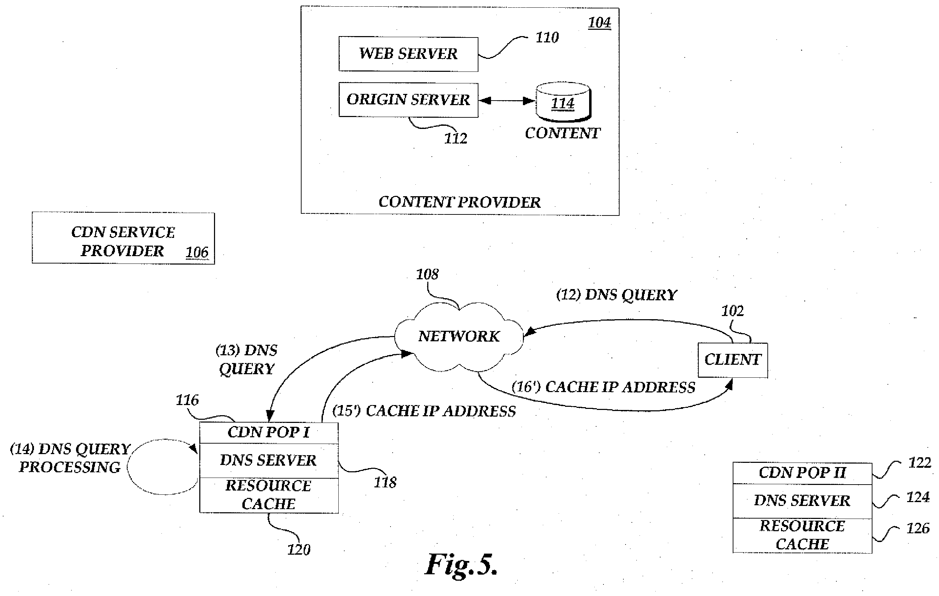

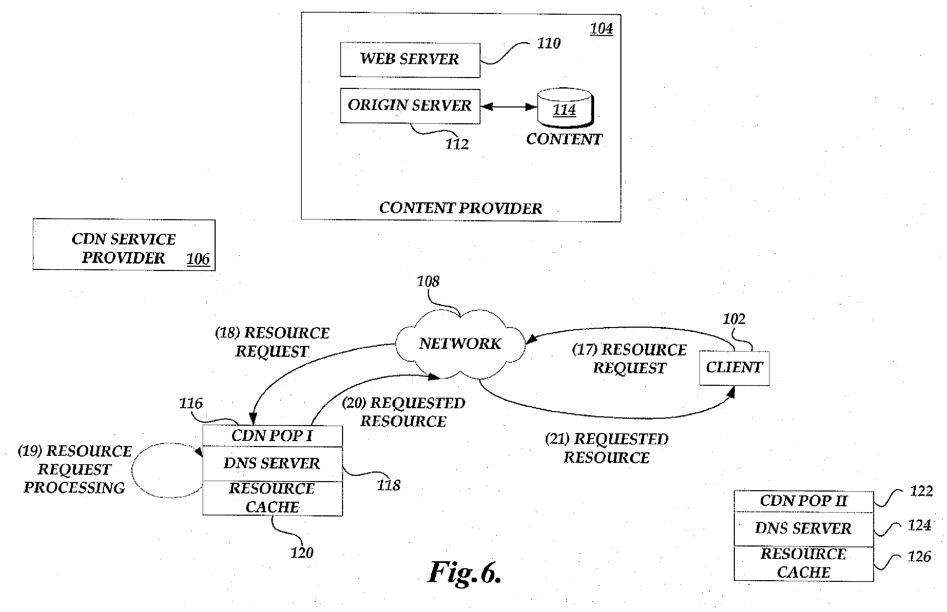

With continued reference to Figure 4A, in either of the above identified embodiments (or any other embodiment), a specific DNS server in the DNS component 118 of a POP 116 receives the DNS query corresponding to the original URL from the client computing device 102. Once one of the DNS servers in the DNS component 118 receives the request, the specific DNS server attempts to resolve the request. In one illustrative embodiment, as shown in reference to Figure 5, a specific DNS server resolves the DNS query by identifying an IP address of a cache server component that will process the request for the requested resource. As described above and as will be described further below in reference to Figure 6, a selected resource cache component can process the request by either providing the requested resource if it is available or attempt to obtain the requested resource from another source, such as a peer cache server computing device or the origin server 112 of the content provider 104.

Returning to Figure 4A, as an alternative to selecting a resource cache component upon receipt of a DNS query as described in reference to Figure 5, the CDN service provider 106 can maintain sets of various alternative resource identifiers. The alternative resource identifiers can be provided by the CDN service provider 106 to the client computing device 102 such that a subsequent DNS query on the alternative resource identifier will be processed by a different DNS server component within the CDN service provider's network. In an illustrative embodiment, the alternative resource identifiers are in the form of one or more canonical name ("CNAME") records. In one embodiment, each CNAME record identifies a domain of the CDN service provider 106 (e.g., "cdnprovider.com" or "cdnprovider-1.com"). As will be explained in greater detail below, the domain in the CNAME does not need to be the same domain found in original URL or in a previous CNAME record. Additionally, each CNAME record includes additional information, such as request routing information, (e.g., "request routing information"). An illustrative CNAME record can have the form of: http://request_routing_information.cdnprovider.com/path/resource-xxx CNAME request_routing_information.cdnprovider.com

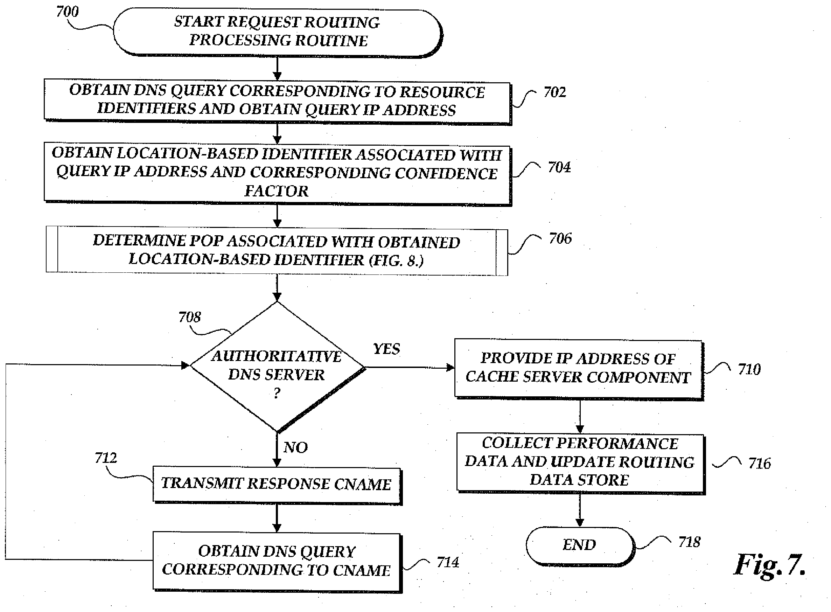

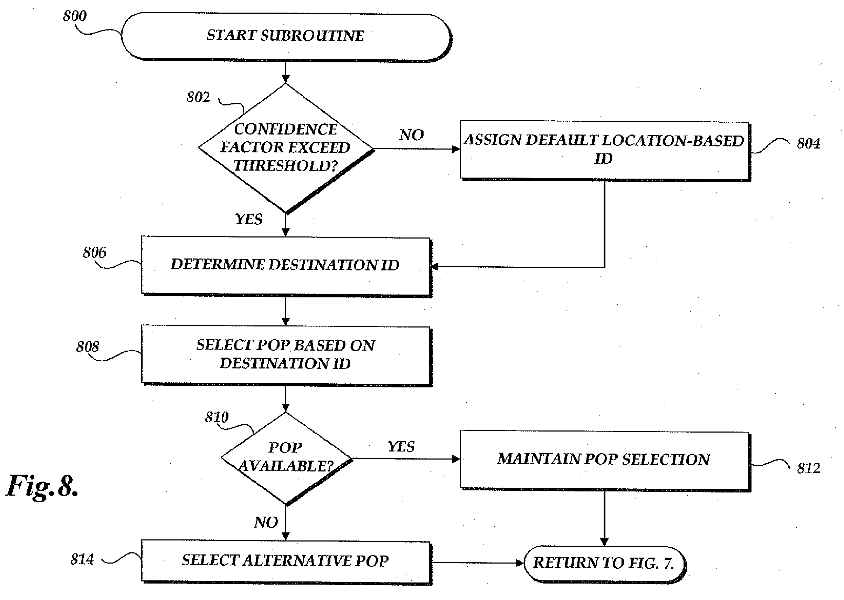

In an illustrative embodiment, the CNAME records are generated and provided by the DNS servers to identify a more appropriate DNS server of the CDN service provider 106. As used in accordance with the present disclosure, appropriateness can be defined in any manner by the CDN service provider 106 for a variety of purposes. In an illustrative embodiment, as will be described in greater detail below in reference to Figures 7 and 8, the CDN service provider 106 will utilize client location information associated with the client computing device 102 or its local DNS resolver, at least in part, to identify the more appropriate DNS server of the CDN service provider 106. In particular, the CDN service provider 106 can utilize an IP address associated with a client computing device DNS query to identify a corresponding location-based identifier representing a possible location of the client computing device. The CDN service provider 106 can then, in turn, utilize the location-based identifier to identify a destination identifier representing a geographic region associated with the CDN service provider 106 from which the resource request should be resolved. Based on the destination identifier, the CDN service provider 106 can then select a POP 116, 122, 128 from a set of POPs that are capable of servicing resource requests for the destination corresponding to the destination identifier. In one example, if more than one POP is identified in the set, the CDN service provider 106 can utilize a distribution allocation for selecting a specific POP associated with the identified destination. In another example, once a POP is selected, the CDN service provider 106 can further use health information to determine whether the selected POP is available to service requests before providing the client computing device with a CNAME corresponding to the selected POP. One skilled in the art will appreciate that the above functionality is illustrative in nature and accordingly should not be construed as limiting.

As described above, in addition to the consideration of client location information (either of the end-client or its associated local DNS resolver component), the CDN service provider 106 can utilize the additional information (e.g., the "additional information") included in the translated URL to select a more appropriate DNS server. In one aspect, the CDN service provider 106 can utilize the additional information to select from a set of DNS servers identified as satisfying criteria associated with the client location information. In another aspect, the CDN service provider 106 can utilize the additional information to validate the DNS server selected in accordance with the client location information or to select an alternative DNS server previously selected in accordance with the client location information. In one example, the CDN service provider 106 can attempt to direct a DNS query to DNS servers according to additional geographic criteria. The additional geographic criteria can correspond to geographic-based regional service plans contracted between the CDN service-provider 106 and the content provider 104 in which various CDN service provider 106 POPs are grouped into geographic regions. Accordingly, a client computing device 102 DNS query received in a region not corresponding to the content provider's regional plan may be better processed by a DNS server in region corresponding to the content provider's regional plan.

In another example, the CDN service provider 106 can attempt to direct a DNS query to DNS servers according to service level criteria. The service level criteria can correspond to service or performance metrics contracted between the CDN service provider 106 and the content provider 104. Examples of performance metrics can include latencies of data transmission between the CDN service provider POPs and the client computing devices 102, total data provided on behalf of the content provider 104 by the CDN service provider POPs, error rates for data transmissions, and the like.

In still a further example, the CDN service provider 106 can attempt to direct a DNS query to DNS servers according to network performance criteria. The network performance criteria can correspond to measurements of network performance for transmitting data from the CDN service provider POPs to the client computing device 102. Examples of network performance metrics can include network data transfer latencies (measured by the client computing device or the CDN service provider 106, network data error rates, and the like.

In accordance with an illustrative embodiment, the DNS server maintains a data store that defines CNAME records for various original URLs. If a DNS query corresponding to a particular original URL matches an entry in the data store, the DNS server returns a CNAME record as defined in the data store. In an illustrative embodiment, the data store can include multiple CNAME records corresponding to a particular original URL. The multiple CNAME records would define a set of potential candidates that can be returned to the client computing device. In such an embodiment, the DNS server, either directly or via a network-based service, can implement additional logic in selecting an appropriate CNAME from a set of possible of CNAMEs. In an illustrative embodiment, each DNS server component 118, 124, 130 maintains the same data stores that define CNAME records, which can be managed centrally by the CDN service provider 106. Alternatively, each DNS server component 118, 124, 130 can have POP specific data stores that define CNAME records, which can be managed centrally by the CDN service provider 106 or locally at the POP 116, 122, 128. Still further, each DNS server computing device within the DNS server components 118, 124, 130 can utilize shared data stores managed by a respective POP or a local data store specific to an individual DNS server computing device.

The returned CNAME can also include request routing information that is different from or in addition to the information provided in the URL/CNAME of the current DNS query. For example, a specific regional plan can be identified in the "request_routing_information" portion of the specific CNAME record. A similar approach could be taken to identify service level plans and file management by including a specific identifier in the "request_routing_information" portion of the CNAME record. In another embodiment, request routing information can be found in the identification of a CDN service provider 106 domain different from the domain found in the current URL/CNAME. For example, a specific regional plan domain (e.g., "cdnprovder-region1.com") could be used in the domain name portion of the specific CNAME record. Any additional request routing information can be prepended to the existing request routing information in the current URL/CNAME such that the previous request routing information would not be lost (e.g., serviceplan.regionalplan.cdnprovider.com). One skilled in the relevant art will appreciate that additional or alternative techniques and/or combination of techniques may be used to include the additional request routing information in the CNAME record that is selected by the DNS server component 118.

With continued reference to Figure 4A, one skilled in the relevant art will appreciate that the DNS server may select (or otherwise obtain) a CNAME record that is intended to resolve to a more appropriate DNS server of the CDN service provider 106. It may be possible, however, that the same DNS server would also be authoritative for the subsequent DNS query for the CNAME to be provided to the client computing device. For example, a specific DNS server may be authoritative based on a particular geographic location associated with the client computer device and a specific regional plan identified by a content provider plan based on the client location information. Thus, returning a CNAME would still result in the DNS query arriving at the same DNS server (which may also be due in part to the client computing device's geography). In such an embodiment, the DNS server, such as DNS server component 118, may choose to resolve the future DNS query in advance.

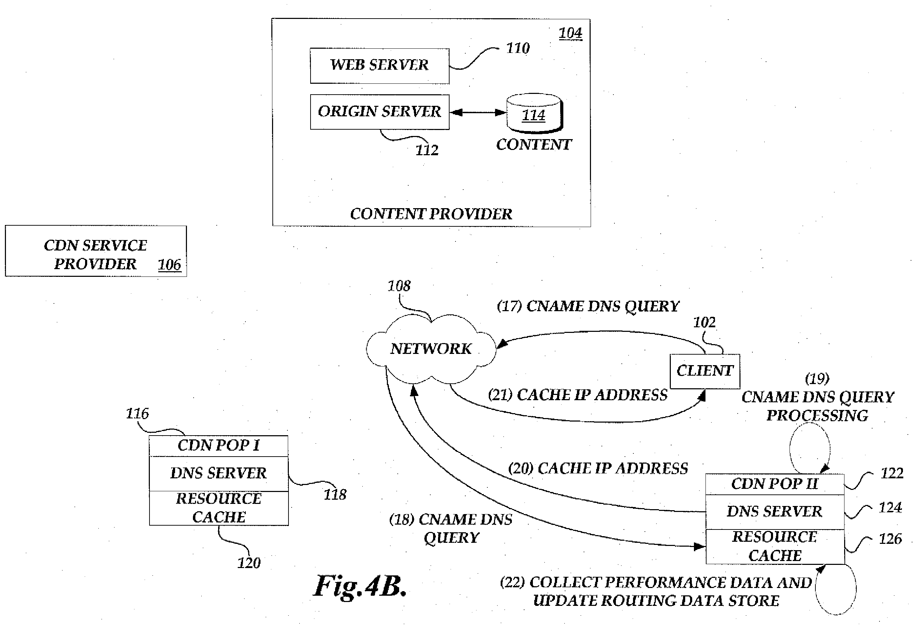

With reference now to Figure 4B, upon receipt of the CNAME from the DNS server component 118, the client computing device 102 generates a subsequent DNS query corresponding to the CNAME. As previously discussed with regard to Figure 4A, the DNS query process could first start with DNS queries for the "." and "com" portions, followed by a query for the "cdnprovider" portion of the CNAME. To the extent, however, that the results of a previous DNS queries can be cached (and remain valid), the client computing device 102 can utilize the cached information and does not need to repeat the entire process. However, at some point, depending on whether the CNAME provided by DNS server component 118 (Figure 4A) and the previous URL/CNAME share common CDN service provider domains, the current CNAME DNS query will be processed by a different POP provided by the CDN service provider 106. As illustrated in Figure 4B, the DNS server component 124 of POP 122 receives the current CNAME based on the different information in the current CNAME previously provided by the DNS server component 118. As previously described, the DNS server component 124 can then determine whether to resolve the DNS query on the CNAME with an IP address of a cache component that will process the content request or whether to provide another alternative resource identifier selected in the manners described above.

For purposes of illustration, assume that the DNS server component 124 processes the content request by returning an IP address of a resource cache component. In an illustrative embodiment, the DNS server component 124 can utilize a variety of information in selecting a resource cache component. In one example, the DNS server component 124 can default to a selection of a resource cache component of the same POP. In another example, the DNS server components can select a resource cache component based on various load balancing or load sharing algorithms. Still further, the DNS server components can utilize network performance metrics or measurements to assign specific resource cache components. The IP address selected by a DNS server component may correspond to a specific caching server in the resource cache. Alternatively, the IP address can correspond to a hardware/software selection component (such as a load balancer).

With continued reference to Figure 4B, the CDN service provider 106 collects performance data associated with resolving the content request and utilizes the performance data to determine whether any updates to the routing information should be made. The CDN service provider 106 can collect performance data at any time during the process or after resolution of the content request. Such performance data can include measurements of network performance for transmitting data from the CDN service provider POPs to the client computing device 102. In one embodiment, network data transfer latencies associated with the delivery of the requested resource are measured by the client computing device 102. Alternatively, the CDN service provider 106, such as through the resource cache component, can measure the performance as part of providing content to a client computing device. Such network performance data can be managed and maintained globally by the CDN service provider and shared with the DNS servers of the CDN or individually by the DNS servers of the CDN service provider. Moreover, network performance criteria can be provided as a batch process from POPs or sent in response to a request from one POP to another.

Additionally, while performance data can be collected relative to an end-client's experience in one embodiment, this data collection can be independent of how a client request is routed. For example, the routing choice for a client request can be based on an IP address associated with the client's DNS resolver, but the performance data associated with resolving that request may be based on the experience of the end-client device.

Based on the collected performance data, the CDN service provider can then determine whether an update to routing information associated with client location information is needed. Updates to routing information can be implemented in a number of ways, such as by modifying and/or deleting existing routing information, adding new routing information, and the like. In one embodiment, the update determination can be made by the CDN service provider globally or by the individual DNS service components or DNS servers. In an illustrative embodiment where individual DNS servers determine whether to update routing information, each DNS server can manage and maintain routing information unique to the particular DNS server. In this illustrative embodiment, the performance data can be maintained globally by the CDN service provider and shared with the DNS components and/or DNS servers, with each DNS component and/or DNS server managing how the performance data is used. Accordingly, routing information may vary from one DNS component/server to another.

With reference now to Figure 6, in an illustrative example, assume that the DNS server component 124 has selected the resource cache component 126 of POP 122. Upon receipt of the IP address for the resource cache component 126, the client computing device 102 transmits a request for the requested content to the resource cache component 126. The resource cache component 126 processes the request in a manner described above and the requested content is transmitted to the client computing device 102.

With reference now to Figure 7, one embodiment of a request routine 700 implemented by the CDN service provider 106 for processing a resource request, as well as performance data associated with resolving the resource request, will be described. One skilled in the relevant art will appreciate that actions/steps outlined for routine 700 may be implemented by one or many computing devices/components that are associated with the CDN service provider 106. Accordingly, routine 700 has been logically associated as being generally performed by the CDN service provider 106, and thus the following illustrative embodiments should not be construed as limiting.

At block 702, one of the DNS server components 118, 124, 130 receives a DNS query corresponding to a resource identifier. As previously discussed, the resource identifier can be a URL that has been embedded in content requested by the client computing device 102 and previously provided by the content provider 104. Alternatively, the resource identifier can also correspond to a CNAME provided by a content provider DNS server in response to a DNS query previously received from the client computing device 102. The receiving DNS server also obtains an IP address associated with the DNS query from the requesting client computing device 102 ("query IP address") at block 702. The query IP address can correspond to an IP address of the client computing device or any local DNS resolver component associated with the client computing device.

Next, at block 704, the receiving DNS server obtains a location-based identifier associated with the query IP address. Each DNS server maintains (or otherwise has access to) a data store 134 mapping a set of location-based identifiers with at least portions of known IP addresses (e.g., mapping a specific location-based identifier with a specific IP address or specific partial IP address). Utilizing the data store 134, the receiving DNS server attempts to match the IP address associated with the client computing device 102 DNS query (as transmitted via the local DNS resolver component) with the IP addresses in the data store 134. If the query IP address can be partially matched to an IP address in the data store 134, the DNS server identifies a corresponding location-based identifier. In this way, query IP addresses that the receiving DNS server has not previously evaluated can be routed based on existing data, and as will be described further below, updates can subsequently be made to the routing information based on performance data related to the query. For example, the receiving DNS server can determine that a query IP address (e.g., 128.1.3.12) that falls in a particular group of IP addresses (e.g., 128.1.x.x) will be treated the same until the CDN service provider 106 determines that the query IP address should be treated differently.

As similarly set forth above, the location-based identifiers can correspond to locations directly determined based on physical locations or logical locations associated with the origin of the DNS query. Additionally, the location-based identifier can be inferred based on associating a relative location to known locations. For example, the location-based identifier can be attributed to known locations of POPs (corresponding to the CDN service provider) based on measured latency information associated with request routing between the client computing device or its local DNS resolver and these POPs. The measured latency information can be premeasured, such as through testing procedures or previously observed request routing behavior. Alternatively, the measured latency information can be dynamically measured in a real time basis or semi-real time basis.

In an illustrative embodiment, the DNS server also optionally obtains a confidence factor associated with the location-based identifier from the data store 134 at block 704. The confidence factor corresponds to a degree of confidence in the accuracy of the associated location-based identifier to the query IP address. The optional confidence factor will be further discussed in reference to Figure 8.

Next, at a block 706, the receiving DNS server determines a POP from a set of one or more POPs associated with the obtained location-based identifier for resolving the resource request. Generally, the set of one or more POPs are capable of servicing resource requests from a region associated with the identified location of the requesting client computing device 102. As will be described further below, Figure 8 illustrates one embodiment of a request routing subroutine for performing the functionality associated with block 706.

At decision block 708, a test is conducted to determine whether the current DNS server is authoritative to resolve the DNS query. In one illustrative embodiment, the DNS server can determine whether it is authoritative to resolve the DNS query if the determined POP for resolving the resource request corresponds to the same POP associated with the receiving DNS server. If the determined POP indeed corresponds to the same POP associated with the receiving DNS server, then the receiving DNS server is considered to be authoritative, and the receiving DNS server identifies a cache server associated with the resource cache component from the same POP to process a subsequent client resource request (e.g., a request for the embedded resource) at block 710. The receiving DNS server resolves the DNS query by returning the IP address of, for example, a default or specific cache server or a load balancing component (as appropriate) associated with the resource cache component from the same POP. A number of methodologies for selecting an appropriate resource cache component at the POP may be implemented.

Alternatively, if at decision block 708 the determined POP corresponds to another POP of the CDN service provider 106, and hence the receiving DNS server is not authoritative, the receiving DNS server selects and transmits an alternative resource identifier at block 712. Specifically, in one embodiment, the receiving DNS server identifies an appropriate CNAME corresponding to the selected POP and transmits the CNAME to the client computing device 102. At block 714, different DNS server components 118, 124, 130 then receive a DNS query from the client computing device 102 corresponding to the CNAME. The routine 700 then returns to decision block 708 and continues to repeat as appropriate.

Alternative or additional methodologies may also be practiced to determine whether the DNS server is authoritative. In one embodiment, the receiving DNS server may maintain one or more CNAMEs that define various alternatives for request routing processing based on geographic regions of the CDN service provider 106. In this embodiment, instead of determining a POP associated with the obtained location-based identifier at block 706, the receiving DNS server can determine a destination identifier associated with the obtained location of the client computing device, as will be similarly discussed below in reference to Figure 8 at block 806. The DNS server in this alternative embodiment can then select an appropriate CNAME of an alternative POP based on the determined destination identifier alone or in combination with other request routing criteria.

Next, at a block 716, the CDN service provider 106 collects performance data associated with resolving the content request and utilizes the performance data to determine whether any updates to routing information associated with client location information should be made. As mentioned above, the CDN service provider 106 can collect performance data at any time during the above process or after resolution of the content request. The CDN service provider 106 can then process the collected performance data at block 716 to determine whether any updates to the routing data store 134 should be made. As will be further described below, routing updates associated with client location information include, for example, updates to query IP address to location-based identifier mappings, location-based identifier to destination identifier mappings, POP distribution allocations, failover list entries and distribution allocations, and the like.

In one illustrative embodiment, the CDN service provider 106 can collect performance data to determine whether any modifications should be made to the query IP address to location-based identifier mappings in the routing data store 134. For example, if a first resource request associated with a particular location-based identifier results in poor routing performance, yet other resource requests from the same location result in good routing performance, the CDN service provider may determine that the location-based identifier associated with the first resource request is inaccurate. In this example, the CDN service provider 106 may utilize client profile data associated with the requesting client computing device to determine an alternative location to map to the query IP address. For example, the CDN service provider 106 may refer to a client's user profile data in the routing data store 134 to determine an alternate billing address or a shipping address for the client. The CDN service provider 106 can use this newly identified location to designate a new location-based identifier associated with the query IP address. Specifically, in one embodiment, the CDN service provider 106 can add a new entry to the routing data store 134 mapping the query IP address to the new location-based identifier. Alternatively, in another embodiment, the CDN service provider 106 can modify the existing location-based identifier to at least partial IP address mapping entry, which is associated with the query IP address, by replacing the existing location-based identifier with the new location-based identifier. In a specific illustrative embodiment, the CDN service provider 106 can use the performance data to determine to collapse two or more location-based identifier to at least partial IP address mapping entries into a new single mapping entry. In addition or alternatively, the CDN service provider 106 can use the performance data to separate a current mapping entry into two or more mapping entries.

In another embodiment, if all resource requests associated with a particular location-based identifier result in poor routing performance, the CDN service provider 106 may determine that the query IP address to location-based identifier mappings are accurate, but the associated destination identifiers (as will be further described in reference to Figure 8 at block 806) or the associated POPs (or corresponding CNAMEs) need modification. In this example, the CDN service provider may modify the location-based identifier to destination identifier mappings or the available POP selections associated with the location and/or destination identifiers.

In yet another illustrative embodiment, a probability of selecting each POP (or corresponding CNAME) in a set (such as at block 706 or, as further described below, at block 808) can be initially defined in a number of ways, and the receiving DNS server selects a POP/CNAME based on the defined probabilities. For example, a set of POPs may be identified as corresponding to a particular destination identifier as will be further described below in reference to Figure 8. The selection of a particular POP from the set can be based on a distribution allocation. For example, the CDN service provider 106 may provide three POPs, such as Seattle, San Francisco, and Los Angeles POPs, in a West Coast Region of the United States. In this example, a distribution allocation may provide that the Seattle POP be used 60% of the time, while the San Francisco and Los Angeles POPs are each used 20% of the time. Accordingly, in this illustrative embodiment, a DNS server will most frequently select the POP/CNAME with the highest probability of selection, but can also, at times based on the corresponding probabilities, select a CNAME with a lower probability of selection. In this case, the probabilities correspond to anticipated performance of the corresponding computing device. The CDN service provider 106 can monitor performance of delivering requested resources to these POPs and thereafter update the probabilities. In further embodiments, the probabilities can correspond to load shedding or other network traffic mitigation. Moreover, in other embodiments, some of the POPs located in a particular region may be omitted from the initial distribution allocation, and instead may be identified in a failover list and used if one of the originally selected POPs is unavailable. The failover list may also have a distribution allocation assigned to a set of POPs in the list, which can also be updated based on performance data.

With reference now to Figure 8, one embodiment of a request routing subroutine 800 for selecting a POP associated with the location of the requesting client computing device will be described. One skilled in the relevant art will appreciate that actions/steps outlined for routine 800 may be implemented by one or many computing devices/components that are associated with the CDN service provider 106. Accordingly, routine 800 has been logically associated as being performed by the CDN service provider 106.

At decision block 802, where the receiving DNS server of the CDN service provider 106 has obtained a confidence factor associated with the location-based identifier (from block 704 of Figure 7), a test is performed to determine whether the confidence factor exceeds a minimum threshold value. If the confidence factor does not exceed a minimum threshold, the DNS server assigns a default location-based identifier at block 804. In one embodiment, the default location-based identifier may correspond to the location of the receiving DNS server. If the confidence factor associated with the obtained location-based identifier exceeds the minimum threshold at block 802 or after a default location-based identifier is assigned at block 804, the receiving DNS server determines a destination identifier for the DNS query at block 806.

However, in an alternative embodiment, the foregoing functionality associated with obtaining and analyzing the confidence factor may be eliminated. In one embodiment, this functionality may instead be implemented as a preprocessing step such that the query IP address to location-based identifier mappings provided in the data store 134 already take a confidence assessment into consideration. For example, prior to generating the query IP address to location-based identifier mappings, any data mapping entry having a low confidence factor may be filtered out of the data mappings. The filtered query IP address to location-based identifier mappings may then be used by the CDN service provider 106 to determine a destination identifier at block 806.

Returning to block 806 of Figure 8, in one embodiment, the receiving DNS server determines the destination identifier according to a manually generated table from the data store 134 in which the destination identifier is determined as a function of the location-based identifier. However, the receiving DNS server can also provide an alternative destination identifier in accordance with a manually initiated administrative process. One embodiment of the selection of the initial destination identifier and the manually initiated administrative process follows.

In an illustrative embodiment, the receiving DNS server utilizes the manually generated table mapping location-based identifiers to destination identifiers based on vector mapping and additional CDN administrator manipulation. The destination identifier corresponds to a definition of a geographic region encompassing one or more locations (e.g., a West Coast destination encompassing the states of Washington, Oregon and California). However, the DNS server may be configured to override the default destination identifier in accordance with a manually configured exception process determined as a function of the identity of the content provider (as obtained through the content provider identifier included in the DNS query).

In one embodiment, a CDN administrator can override the allocation of a destination identifier for specific content provider identifiers. For example, the DNS server can utilize the content provider identifier to ensure that the content provider's subscription with CDN service provider 106 allows content to be served from the destination identified in the mapping table. As another example, the content provider identifier can be manually designated to be associated with an alternative destination identifier to redistribute at least a portion of incoming resource requests for a particular content provider among several POPs (e.g., to avoid servicing content requests for a single web page via a single destination by offloading to a different destination).

Next, at block 808, based on the selected destination identifier, the receiving DNS server selects a POP from a list of one or more POPs that have been manually determined by the CDN administrator to be capable of servicing resource requests for the identified destination. If more than one POP is identified in the list of POPS, the receiving DNS server can select a specific POP according a specified distribution allocation for the corresponding destination (e.g., POP A (75%); POP B (25%)). The defined distribution allocation can be defined specifically based on a particular location-based identifier or destination identifier. Such distribution allocations can be modified based on processed performance data as discussed above.

The receiving DNS server then determines whether the selected POP is available at decision block 810. In one embodiment, the DNS server evaluates the availability of the selected POP using POP health information indicative of the availability of the selected POP to process incoming resource requests. If the selected POP is available (as indicated via the POP health information), the receiving DNS server maintains the POP selection from block 808. Accordingly, the process will return to decision block 708 of Figure 7, where if the receiving DNS server is not authoritative, the receiving DNS server returns a CNAME that will result in the receipt of the DNS query by the selected POP (or one of a set of identified POPs). If, however, the selected POP corresponds to the current POP of the receiving DNS server (i.e., the receiving DNS server is authoritative), the receiving DNS server resolves the DNS query by returning the IP address of the default resource cache component at the POP as the CNAME does not necessarily need to be provided (unless additional request routing processing will be implemented).

If the selected POP is not available (as indicated via the POP health information), the receiving DNS server can select an alternative POP at block 814 to process the DNS query. In one embodiment, the alternative POP can be selected via a failover list of alternative POPs that is manually set by a CDN administrator. Specifically, the receiving DNS server can select a specific alternative POP from the failover list according to a specified distribution. As similarly described above, processing will then return to decision block 708 of Figure 7, where if the receiving DNS server is not authoritative for the alternative POP, the receiving DNS server returns a CNAME that will result in the receipt of the DNS query by the selected alternative POP (or one of a set of POPs). If, however, the selected alternative POP corresponds to the current POP of the receiving DNS server (i.e., the receiving DNS server is authoritative), the receiving DNS server resolves the DNS query by returning the IP address of the default resource cache component at the alternative POP as the CNAME does not necessarily need to be provided (unless additional request routing processing will be implemented).

It will be appreciated by those skilled in the art and others that all of the functions described in this disclosure may be embodied in software executed by one or more processors of the disclosed components and mobile communication devices. The software may be persistently stored in any type of non-volatile storage.

Conditional language, such as, among others, "can," "could," "might," or "may," unless specifically stated otherwise, or otherwise understood within the context as used, is generally intended to convey that certain embodiments include, while other embodiments do not include, certain features, elements and/or steps. Thus, such conditional language is not generally intended to imply that features, elements and/or steps are in any way required for one or more embodiments or that one or more embodiments necessarily include logic for deciding, with or without user input or prompting, whether these features, elements and/or steps are included or are to be performed in any particular embodiment.

Any process descriptions, elements, or blocks in the flow diagrams described herein and/or depicted in the attached figures should be understood as potentially representing modules, segments, or portions of code which include one or more executable instructions for implementing specific logical functions or steps in the process. Alternate implementations are included within the scope of the embodiments described herein in which elements or functions may be deleted, executed out of order from that shown or discussed, including substantially concurrently or in reverse order, depending on the functionality involved, as would be understood by those skilled in the art. It will further be appreciated that the data and/or components described above may be stored on a computer-readable medium and loaded into memory of the computing device using a drive mechanism associated with a computer readable storing the computer executable components such as a CD-ROM, DVD-ROM, or network interface further, the component and/or data can be included in a single device or distributed in any manner. Accordingly, general purpose computing devices may be configured to implement the processes, algorithms and methodology of the present disclosure with the processing and/or execution of the various data and/or components described above.
Clause 1. A method comprising:
   obtaining a DNS query from a client computing device at a first DNS server, wherein the DNS query corresponds to a requested resource associated with an original resource identifier provided by a content provider and wherein the first DNS server corresponds to a content delivery network service;
   obtaining a query IP address associated with the DNS query at the first DNS server;
   obtaining a location-based identifier associated with the query IP address and a confidence factor, the confidence factor corresponding to a degree of confidence associated with the accuracy of the location-based identifier to query IP address association;
   determining whether the confidence factor exceeds a threshold value;
   if the confidence factor exceeds the threshold value:
   determining a destination identifier associated with the DNS query, wherein the destination identifier is determined based on the location-based identifier;
   selecting a network point of presence associated with the content delivery network service provider based on the destination identifier;
   determining whether the first DNS server is authoritative to the DNS query based on the selected network point of presence; and
   if the first DNS server is not authoritative: obtaining an alternative resource identifier based on the selected network point of presence, wherein the alternative resource identifier includes information for causing a DNS query to resolve to a domain corresponding to the selected network point of presence;
   transmitting the alternative resource identifier to the client computing device;
   obtaining a subsequent DNS query from the client computing device at a second DNS server, wherein the subsequent DNS query corresponds to the alternative resource identifier provided by the content delivery network service provider;
   determining whether the second DNS server is authoritative to the subsequent DNS query;
   selecting a cache component for providing content associated with the original resource request if the second DNS server is authoritative to the second DNS query; and
   transmitting information identifying the selected cache component if the second DNS server is determined to be authoritative.
Clause 2. The method as recited in Clause 1 further comprising assigning a location-based identifier associated with the first DNS server if the confidence factor does not exceed the threshold value.
Clause 3. The method as recited in Clause 1, wherein the destination identifier corresponds to a geographic region encompassing a location associated with the location-based identifier.
Clause 4. The method as recited in Clause 1 further comprising overriding the determined destination identifier based on the original resource identifier, wherein the original resource identifier provides information associated with an alternative destination identifier.
Clause 5. The method as recited in Clause 1, wherein selecting a network point of presence comprises selecting a network point of presence from a set of network points of presence capable of servicing resource requests associated with the determined destination identifier.
Clause 6. The method as recited in Clause 5, wherein the network point of presence is selected from the set of network points of presence based on a distribution allocation.
Clause 7. The method as recited in Clause 1 further comprising:
   determining whether the selected network point of presence is available prior to determining whether the first DNS server is authoritative to the DNS query based on the selected network point of presence;
   if the selected network point of presence is available, maintaining the selected network point of presence; and
   if the selected network point of presence is not available, selecting an alternative network point of presence.
Clause 8. The method as recited in Clause 7, wherein the availability of the selected network point of presence is based on health information indicative of the availability of the selected network point of presence to process incoming resource requests.
Clause 9. The method as recited in Clause 7, wherein selecting an alternative network point of presence comprises selecting an alternative network point of presence from a failover list of alternative network points of presence.
Clause 10. The method as recited in Clause 9, wherein the alternative network point of presence is selected from the failover list based on a distribution allocation.
Clause 11. The method as recited in Clause 1 further comprising:
   if the first DNS server is determined to be authoritative:
   selecting a cache component for providing content associated with the original resource request; and
   transmitting information identifying the selected cache component.
Clause 12. The method as recited in Clause 1 further comprising overriding the determined destination identifier based on an identity of the content provider.
Clause 13. The method as recited in Clause 12, wherein the determined destination identifier is overridden if the content provider's subscription with the content delivery network service provider does not provide for content to be provided from a destination corresponding to the destination identifier.
Clause 14. The method as recited in Clause 12, wherein the determined destination identifier is overridden if the content provider's subscription with the content delivery network service provider provides for use of an alternative destination identifier.
Clause 15. The method as recited in Clause 1, wherein the query IP address is associated with the client computing device.
Clause 16. The method as recited in Clause 15, wherein the query IP address is associated with a DNS resolver component associated with the client computing device.
Clause 17. The method as recited in Clause 1, wherein the location-based identifier corresponds to a physical location associated with the client computing device.
Clause 18. The method as recited in Clause 1, wherein the location-based identifier corresponds to a logical location associated with the client computing device.
Clause 19. The method as recited in Clause 1, wherein the location-based identifier corresponds to a relative location.
Clause 20. The method as recited in Clause 19, wherein the relative location is inferred based on an association of the relative location to a known location.
Clause 21. The method as recited in Clause 20, wherein the relative location is inferred based on latency information
Clause 22. A method comprising:
   obtaining a DNS query from a client computing device at a first DNS server, wherein the DNS query corresponds to a requested resource associated with an original resource identifier provided by a content provider and wherein the first DNS server corresponds to a content delivery network service;
   obtaining a query IP address associated with the DNS query at the first DNS server;
   obtaining a location-based identifier associated with the query IP address;
   selecting a network point of presence associated with the content delivery network service provider based on the location-based identifier;
   determining whether the first DNS server is authoritative to the DNS query based on the selected network point of presence; and if the first DNS server is not authoritative:
      obtaining an alternative resource identifier based on the selected network point of presence, wherein the alternative resource identifier includes information for causing a DNS query to resolve to a domain corresponding to the selected network point of presence; and
      transmitting the alternative resource identifier to the client computing device.
Clause 23. The method as recited in Clause 22 further comprising determining a destination identifier associated with the DNS query, wherein selecting a network point of presence is further based on the destination identifier.
Clause 24. The method as recited in Clause 23, wherein the destination identifier is determined as a function of the location-based identifier.
Clause 25. The method as recited in Clause 24, wherein the destination identifier corresponds to a geographic region encompassing a location associated with the location-based identifier.
Clause 26. The method as recited in Clause 23 further comprising overriding the determined destination identifier based on an identity of the content provider.
Clause 27. The method as recited in Clause 26, wherein the identity of the content provider is obtained based on the original resource identifier.
Clause 28. The method as recited in Clause 26, wherein the determined destination identifier is overridden if the content provider's subscription with the content delivery network service provider does not provide for content to be provided from a destination corresponding to the destination identifier.
Clause 29. The method as recited in Clause 26, wherein the determined destination identifier is overridden if the content provider's subscription with the content delivery network service provider provides for use of an alternative destination identifier.
Clause 30. The method as recited in Clause 23 further comprising overriding the determined destination identifier based on the original resource identifier, wherein the original resource identifier provides information associated with an alternative destination identifier.
Clause 31. The method as recited in Clause 23, wherein the destination identifier is determined based on an identity of the content provider.
Clause 32. The method as recited in Clause 31, wherein the destination identifier is further determined based on the obtained location-based identifier.
Clause 33. The method as recited in Clause 23, wherein selecting a network point of presence comprises selecting a network point of presence from a set of network points of presence capable of servicing resource requests associated with the determined destination identifier.
Clause 34. The method as recited in Clause 33, wherein the network point of presence is selected from the set of network points of presence based on a distribution allocation.
Clause 35. The method as recited in Clause 22 further comprising:
   determining whether the selected network point of presence is available prior to determining whether the first DNS server is authoritative to the DNS query based on the selected network point of presence;
   if the selected network point of presence is available, maintaining the selected network point of presence; and
   if the selected network point of presence is not available, selecting an alternative network point of presence.
Clause 36. The method as recited in Clause 35, wherein the availability of the selected network point of presence is based on health information indicative of the availability of the selected network point of presence to process incoming resource requests.
Clause 37. The method as recited in Clause 35, wherein selecting an alternative network point of presence comprises selecting an alternative network point of presence from a failover list of alternative network points of presence.
Clause 38. The method as recited in Clause 37, wherein the alternative network point of presence is selected from the failover list based on a distribution allocation.
Clause 39. The method as recited in Clause 22 further comprising:
   if the first DNS server is determined to be authoritative:
   selecting a cache component for providing content associated with the original resource request; and
   transmitting information identifying the selected cache component.
Clause 40. The method as recited in Clause 22 further comprising obtaining a confidence factor corresponding to a degree of confidence associated with the accuracy of the location-based identifier to query IP address association.
Clause 41. The method as recited in Clause 40, wherein a network point of presence is selected based on the location-based identifier if the confidence factor exceeds a threshold value.
Clause 42. The method as recited in Clause 22, wherein the location-based identifier is obtained from a data store containing query IP address to location-based identifier mapping entries.
Clause 43. The method as recited in Clause 42, wherein the data store contains query IP address to location-based identifier mappings only for entries exceeding a minimum threshold confidence factor, the confidence factor corresponding to a degree of confidence associated with the accuracy of the location-based identifier to query IP address association.
Clause 44. The method as recited in Clause 22, wherein the query IP address is associated with the client computing device.
Clause 45. The method as recited in Clause 44, wherein the query IP address is associated with a DNS resolver component associated with the client computing device.
Clause 46. The method as recited in Clause 22, wherein the location-based identifier corresponds to a physical location associated with the client computing device.
Clause 47. The method as recited in Clause 22, wherein the location-based identifier corresponds to a logical location associated with the client computing device.
Clause 48. The method as recited in Claim 22, wherein the location-based identifier corresponds to a relative location.
Clause 49. The method as recited in Clause 48, wherein the relative location is inferred based on an association of the relative location to a known location.
Clause 50. The method as recited in Claim 49, wherein the relative location is inferred based on latency information
Clause 51. A system for request routing comprising:
   a first network point of presence associated with a content delivery network service provider, wherein the first network point of presence includes a DNS server component that receives a DNS query from a client computing device, wherein the DNS query corresponds to a requested resource associated with a first resource identifier, and wherein the DNS server in the first network point of presence is operable to:
   obtain a query IP address associated with the DNS query at the first DNS server;
   obtain a location-based identifier associated with the query IP address;
   select a network point of presence associated with the content delivery network service provider based on the location-based identifier;
   determine whether the first DNS server is authoritative to the DNS query based on the selected network point of presence; and
   if the first DNS server is not authoritative:
      obtain an alternative resource identifier based on the selected network point of presence, wherein the alternative resource identifier includes information for causing a DNS query to resolve to a domain corresponding to the selected network point of presence; and
      transmit the alternative resource identifier to the client computing device.
Clause 52. The system as recited in Clause 51, wherein the DNS server in the first network point of presence is further operable to determine a destination identifier associated with the DNS query, wherein selecting a network point of presence is further based on the destination identifier.
Clause 53. The system as recited in Clause 52, wherein the destination identifier is determined as a function of the location-based identifier.
Clause 54. The system as recited in Clause 52, wherein the DNS server in the first network point of presence is further operable to override the determined destination identifier based on an identity of the content provider.
Clause 55. The system as recited in Clause 54, wherein the identity of the content provider is obtained based on the original resource identifier.
Clause 56. The system as recited in Clause 51, wherein selecting a network point of presence comprises selecting a network point of presence from a set of network points of presence capable of servicing resource requests associated with the determined destination identifier.
Clause 57. The system as recited in Clause 56, wherein the network point of presence is selected from the set of network points of presence based on a distribution allocation.
Clause 58. The system as recited in Clause 51, wherein the DNS server in the first network point of presence is further operable to:
   determine whether the selected network point of presence is available prior to determining whether the first DNS server is authoritative to the DNS query based on the selected network point of presence;
   maintain the selected network point of presence if the selected network point of presence is available; and
   select an alternative network point of presence if the selected network point of presence is not available.
Clause 59. The system as recited in Clause 58, wherein the availability of the selected network point of presence is based on health information indicative of the availability of the selected network point of presence to process incoming resource requests.
Clause 60. The system as recited in Clause 58, wherein selecting an alternative network point of presence comprises selecting an alternative network point of presence from a failover list of alternative network points of presence.
Clause 61. The system as recited in Clause 60, wherein the alternative network point of presence is selected from the failover list based on a distribution allocation.
Clause 62. The system as recited in Clause 51 further comprising:
   a second network point of presence associated with a content delivery network service provider, wherein the second network point of presence includes a DNS server component that receives a subsequent DNS query from a client computing device, wherein the subsequent DNS query corresponds to a requested resource associated with the alternative resource identifier, and wherein the DNS server in the second network point of presence is operable to:
   resolve the subsequent DNS query to identify a cache component for providing content associated with the original resource request; and
   transmit information identifying the identified cache component to the client computing device.
Clause 63. A method comprising:
   obtaining a DNS query from a client computing device at a first DNS server, wherein the DNS query corresponds to a requested resource associated with an original resource identifier provided by a content provider and wherein the first DNS server corresponds to a content delivery network service;
   obtaining a query IP address associated with the DNS query at the first DNS server;
   obtaining a location-based identifier associated with the query IP address;
   obtaining a destination identifier based on the obtained location-based identifier;
   determining whether the first DNS server is authoritative to the DNS query based on the destination identifier; and
   if the first DNS server is not authoritative:
      obtaining an alternative resource identifier based on the selected network point of presence, wherein the alternative resource identifier includes information for causing a DNS query to resolve to a domain corresponding to the selected network point of presence; and
      transmitting the alternative resource identifier to the client computing device.
Clause 64. A method for request routing comprising:
   obtaining a DNS query from a client computing device at a first DNS server, wherein the DNS query corresponds to a requested resource associated with a resource identifier and wherein the first DNS server corresponds to a content delivery network service provider;
   determining that the first resource identifier is associated with an alternative resource identifier based on location information associated with the client computing device, wherein the location information is obtained from information corresponding to a mapping of at least partial IP addresses to known locations;
   transmitting the alternative resource identifier to the client computing device, wherein the alternative resource identifier includes information for causing a DNS query to resolve to a domain corresponding to the content delivery service provider and supplemental request routing information not included in the first resource identifier;
   obtaining a subsequent DNS query from the client computing device at a second DNS server, wherein the subsequent DNS query corresponds to the alternative resource identifier provided by the content delivery network service provider and wherein the second DNS server corresponds to the content delivery network service provider;
   resolving the subsequent DNS query, at the second DNS server, to identify a cache component for providing content associated with the original resource request; and
   transmitting information identifying the identified cache component to the client computing device.
Clause 65. A computer-implemented method comprising:
   obtaining a first DNS query from a client computing device at a first DNS server, wherein the first DNS query corresponds to a first requested resource and wherein the first DNS server corresponds to a content delivery network service;
   obtaining a query IP address associated with the first DNS query at the first DNS server;
   obtaining a location-based identifier associated with at least a partial IP address corresponding to the query IP address from a routing data store, wherein the routing data store includes at least partial IP address to location-based identifier mappings;
   resolving the first DNS query based on the location-based identifier; collecting performance data associated with transmission of the first requested resource;
   modifying the routing data store based on the performance data with an updated location-based identifier associated with the query IP address;
   obtaining a second DNS query from the client computing device at a second DNS server, wherein the second DNS query corresponds to a second requested resource;
   resolving the second DNS query based on the updated location-based identifier associated with the query IP address of the client computing device.
Clause 66. The method as recited in Clause 65, wherein the updated location-based identifier is determined based on user profile information associated with the client computing device.
Clause 67. The method as recited in Clause 66, wherein the updated location-based identifier corresponds to an alternative billing address associated with the client computing device.
Clause 68. The method as recited in Clause 66, wherein the updated location-based identifier corresponds to a shipping address associated with the client computing device.
Clause 69. The method as recited in Clause 65, wherein modifying the routing data store comprises adding a new entry to the routing data store mapping the query IP address to the updated location-based identifier.
Clause 70. The method as recited in Clause 65, wherein modifying the routing data store comprises modifying an existing location-based identifier to at least partial IP address mapping entry with the updated location-based identifier.
Clause 71. The method as recited in Clause 65, wherein the query IP address is associated with the client computing device.
Clause 72. The method as recited in Clause 71, wherein the query IP address is associated with a DNS resolver component associated with the client computing device.
Clause 73. The method as recited in Clause 65, wherein the location-based identifier corresponds to a physical location associated with the client computing device.
Clause 74. The method as recited in Clause 65, wherein the location-based identifier corresponds to a logical location associated with the client computing device.
Clause 75. The method as recited in Clause 65, wherein the location-based identifier corresponds to a relative location.
Clause 76. The method as recited in Clause 75, wherein the relative location is inferred based on an association of the relative location to a known location.
Clause 77. The method as recited in Clause 76, wherein the relative location is inferred based on latency information
Clause 78. A computer-implemented method comprising:
   obtaining a first DNS query from a client computing device at a first DNS server, wherein the first DNS query corresponds to a first requested resource and wherein the first DNS server corresponds to a content delivery network service;
   obtaining a query IP address associated with the first DNS query at the first DNS server;
   obtaining a location-based identifier associated with at least a partial IP address corresponding to the query IP address from a routing data store;
   resolving the first DNS query based on the location-based identifier;
   collecting performance data associated with transmission of the first requested resource;
   updating routing information in the routing data store associated with the query IP address of the client computing device based on the performance data;
   obtaining a second DNS query from the client computing device at a second DNS server, wherein the second DNS query corresponds to a second requested resource;
   resolving the second DNS query based on the updated routing information associated with the query IP address of the client computing device.
Clause 79. The method as recited in Clause 78, wherein the routing data store includes at least partial IP address to location-based identifier mappings.
Clause 80. The method as recited in Clause 79, wherein updating the routing information comprises modifying the routing data store based on the performance data with an updated location-based identifier associated with the query IP address.
Clause 81. The method as recited in Clause 80, wherein modifying the routing data store comprises adding a new entry to the routing data store mapping the query IP address to the updated location-based identifier.
Clause 82. The method as recited in Clause 80, wherein modifying the routing data store comprises modifying an existing location-based identifier to at least partial IP address mapping entry with the updated location-based identifier.
Clause 83. The method as recited in Clause 78, wherein updating the routing information comprises collapsing two or more location-based identifier to at least partial IP address mapping entries into a single location-based identifier to at least partial IP address data entry based on the performance data.
Clause 84. The method as recited in Clause 79, wherein the at least partial IP address to location-based identifier mappings each have a corresponding confidence factor.
Clause 85. The method as recited in Clause 84, wherein updating the routing information comprises modifying the routing data store based on the performance data by updating the confidence factor corresponding to the at least partial IP address to location-based identifier mapping associated with the query IP address of the client computing device.
Clause 86. The method as recited in Clause 79, wherein the routing data store further includes location-based identifier to destination identifier mappings.
Clause 87. The method as recited in Clause 86, wherein modifying the routing information comprises modifying the routing data store based on the performance data with an updated destination identifier corresponding to the location-based identifier associated with the query IP address.
Clause 88. The method as recited in Clause 86, wherein the routing data store further includes network points of presence mappings to at least one of the location-based identifiers and the destination identifiers.
Clause 89. The method as recited in Clause 88, wherein modifying the routing information comprises modifying the routing data store based on the performance data with an updated network point of presence mapping.
Clause 90. The method as recited in Clause 88, wherein the network points of presence mappings include distribution allocations.
Clause 91. The method as recited in Clause 90, wherein modifying the routing information comprises modifying the routing data store based on the performance data with an updated distribution allocation.
Clause 92. The method as recited in Clause 88, wherein the routing data store further includes a failover list for each network point of presence mapping, wherein the failover list identifies one or more alternative network points of presence for resolving a DNS query associated with the query IP address should the network points of presence identified in the network points of presence mappings be unavailable.
Clause 93. The method as recited in Clause 92, wherein modifying the routing information comprises modifying the routing data store based on the performance data with an updated failover list.
Clause 94. The method as recited in Clause 78, wherein the query IP address is associated with the client computing device.
Clause 95. The method as recited in Clause 94, wherein the query IP address is associated with a DNS resolver component associated with the client computing device.
Clause 96. The method as recited in Clause 78, wherein the location-based identifier corresponds to a physical location associated with the client computing device.
Clause 97. The method as recited in Clause 78, wherein the location-based identifier corresponds to a logical location associated with the client computing device.
Clause 98. The method as recited in Clause 78, wherein the location-based identifier corresponds to a relative location.
Clause 99. The method as recited in Clause 98, wherein the relative location is inferred based on an association of the relative location to a known location.
Clause 100. The method as recited in Clause 99, wherein the relative location is inferred based on latency information
Clause 101. A computer system comprising:
   a routing data store including at least partial query IP address to location-based identifier mappings; and
   a first network point of presence associated with a content delivery network service provider, wherein the first network point of presence is operable to:
      obtain a first DNS query from a client computing device at a first DNS server, wherein the first DNS query corresponds to a first requested resource and wherein the first DNS server corresponds to a content delivery network service;
      obtain a query IP address associated with the first DNS query at the first DNS server;
      obtain a location-based identifier associated with at least a partial IP address corresponding to the query IP address from the routing data store;
      resolve the first DNS query based on the location-based identifier;
      collect performance data associated with transmission of the first requested resource;
      update routing information in the routing data store associated with the query IP address of the client computing device based on the performance data;
      obtain a second DNS query from the client computing device at a second DNS server, wherein the second DNS query corresponds to a second requested resource; and
      resolve the second DNS query based on the updated routing information associated with the query IP address of the client computing device.
Clause 102. The system as recited in Clause 101, wherein updating the routing information comprises modifying the routing data store based on the performance data with an updated location-based identifier associated with the query IP address.
Clause 103. The system as recited in Clause 102, wherein modifying the routing data store comprises adding a new entry to the routing data store mapping the query IP address to the updated location-based identifier.
Clause 104. The system as recited in Clause 102, wherein modifying the routing data store comprises modifying an existing location-based identifier to at least partial IP address mapping entry with the updated location-based identifier.
Clause 105. The system as recited in Clause 101, wherein updating the routing information comprises collapsing two or more location-based identifier to at least partial IP address mapping entries into a single location-based identifier to at least partial IP address data entry based on the performance data.
Clause 106. The system as recited in Clause 102, wherein the at least partial IP address to location-based identifier mappings in the routing data store each have a corresponding confidence factor.
Clause 107. The system as recited in Clause 106, wherein updating the routing information comprises modifying the routing data store based on the performance data by updating the confidence factor corresponding to the at least partial IP address to location-based identifier mapping associated with the query IP address of the client computing device.
Clause 108. The system as recited in Clause 102, wherein the routing data store further includes location-based identifier to destination identifier mappings.
Clause 109. The system as recited in Clause 108, wherein modifying the routing information comprises modifying the routing data store based on the performance data with an updated destination identifier corresponding to the location-based identifier associated with the query IP address.
Clause 110. The system as recited in Clause 108, wherein the routing data store further includes network points of presence mappings to at least one of the location-based identifiers and the destination identifiers.
Clause 111. The system as recited in Clause 110, wherein modifying the routing information comprises modifying the routing data store based on the performance data with an updated network point of presence mapping.
Clause 112. The system as recited in Clause 110, wherein the network points of presence mappings include distribution allocations.
Clause 113. The system as recited in Clause 112, wherein modifying the routing information comprises modifying the routing data store based on the performance data with an updated distribution allocation.
Clause 114. The system as recited in Clause 110, wherein the routing data store further includes a failover list for each network point of presence mapping, wherein the failover list identifies one or more alternative network points of presence for resolving a DNS query associated with the query IP address should the network points of presence identified in the network points of presence mappings be unavailable.
Clause 115. The system as recited in Clause 114, wherein modifying the routing information comprises modifying the routing data store based on the performance data with an updated failover list.
Clause 116. The system as recited in Clause 101, wherein the query IP address is associated with the client computing device.
Clause 117. The system as recited in Clause 116, wherein the query IP address is associated with a DNS resolver component associated with the client computing device.
Clause 118. The system as recited in Clause 101, wherein the location-based identifier corresponds to a physical location associated with the client computing device.
Clause 119. The system as recited in Clause 101, wherein the location-based identifier corresponds to a logical location associated with the client computing device.
Clause 120. The system as recited in Clause 101, wherein the location-based identifier corresponds to a relative location.
Clause 121. The system as recited in Clause 120, wherein the relative location is inferred based on an association of the relative location to a known location.
Clause 122. The system as recited in Clause 121, wherein the relative location is inferred based on latency information

It should be emphasized that many variations and modifications may be made to the above-described embodiments, the elements of which are to be understood as being among other acceptable examples. All such modifications and variations are intended to be included herein within the scope of this disclosure and protected by the following claims.

## Claims

1. A method performed by a first DNS server in a first network point of presence comprising:
obtaining a DNS query from a client computing device at the first DNS server of a first network point of presence associated with a content delivery network service provider, wherein the DNS query corresponds to a requested resource associated with an original resource identifier provided by the content provider and wherein the first DNS server corresponds to a content delivery network service;
obtaining a query IP address associated with the DNS query at the first DNS server;
obtaining a location-based identifier associated with the query IP address wherein the location-based identifier corresponds to a physical or logical location associated with the client computing device;
selecting a network point of presence associated with the content delivery network service provider based on the location-based identifier;
determining whether the first DNS server is authoritative to the DNS query based on the selected network point of presence; and
if the first DNS server is not authoritative:
obtaining an alternative resource identifier based on the selected network point of presence, wherein the alternative resource identifier includes information for causing a DNS query to resolve to a domain corresponding to the selected network point of presence; and
transmitting the alternative resource identifier to the client computing device.

2. The method as recited in Claim 1 further comprising determining, by the first DNS server, a destination identifier associated with the DNS query, wherein selecting a network point of presence is further based on the destination identifier.

3. The method as recited in Claim 2, wherein the destination identifier corresponds to a geographic region encompassing a location associated with the location- based identifier.

4. The method as recited in Claim 2 further comprising overriding the determined destination identifier based on an identity of the content provider.

5. The method as recited in Claim 2 further comprising overriding the determined destination identifier based on the original resource identifier, wherein the original resource identifier provides information associated with an alternative destination identifier.

6. The method as recited in Claim 2, wherein selecting a network point of presence comprises selecting a network point of presence from a set of network points of presence capable of servicing resource requests associated with the determined destination identifier.

7. The method as recited in Claim 1 further comprising:
determining whether the selected network point of presence is available prior to determining whether the first DNS server is authoritative to the DNS query based on the selected network point of presence;
if the selected network point of presence is available, maintaining the selected network point of presence; and
if the selected network point of presence is not available, selecting an alternative network point of presence.

8. The method as recited in Claim 1 further comprising:
if the first DNS server is determined to be authoritative:
selecting a cache component for providing content associated with the original resource request; and
transmitting information identifying the selected cache component.

9. The method of any one of the preceding claims, further comprising
at a second DNS server of a second network point of presence associated with a content delivery network service provider:
receiving a subsequent DNS query from a client computing device, wherein the subsequent DNS query corresponds to a requested resource associated with the alternative resource identifier:
resolving the subsequent DNS query to identify a cache component for providing content associated with the original resource request; and
transmitting information identifying the identified cache component to the client computing device.

10. A system for request routing comprising:
a first network point of presence associated with a content delivery network service provider, wherein the first network point of presence includes a DNS server component that receives a DNS query from a client computing device, wherein the DNS query corresponds to a requested resource associated with a first resource identifier, and wherein the DNS server in the first network point of presence is operable to:
obtain a query IP address associated with the DNS query at the first DNS server;
obtain a location-based identifier associated with the query IP address, wherein the location-based identifier corresponds to a physical or logical location associated with the client computing device;
select a network point of presence associated with the content delivery network service provider based on the location-based identifier;
determine whether the first DNS server is authoritative to the DNS query based on the selected network point of presence; and
if the first DNS server is not authoritative:
obtain an alternative resource identifier based on the selected network point of presence, wherein the alternative resource identifier includes information for causing a DNS query to resolve to a domain corresponding to the selected network point of presence; and
transmit the alternative resource identifier to the client computing device.

11. The system as recited in Claim 10, wherein the DNS server in the first network point of presence is further operable to determine a destination identifier associated with the DNS query, wherein selecting a network point of presence is further based on the destination identifier.

12. The system as recited in Claim 10 or Claim 11, wherein the DNS server in the first network point of presence is further operable to:
determine whether the selected network point of presence is available prior to determining whether the first DNS server is authoritative to the DNS query based on the selected network point of presence;
maintain the selected network point of presence if the selected network point of presence is available; and
select an alternative network point of presence if the selected network point of presence is not available.

13. The system as recited in any one of Claims 9 to 12 further comprising:
a second network point of presence associated with a content delivery network service provider, wherein the second network point of presence includes a DNS server component that receives a subsequent DNS query from a client computing device, wherein the subsequent DNS query corresponds to a requested resource associated with the alternative resource identifier, and wherein the DNS server in the second network point of presence is operable to:
resolve the subsequent DNS query to identify a cache component for providing content associated with the original resource request; and
transmit information identifying the identified cache component to the client computing device.

## Patentansprüche

1. Verfahren, das von einem ersten DNS-Server in einem ersten Netz-Einwählknoten durchgeführt wird, das Folgendes umfasst:
Erhalten einer DNS-Anfrage von einer Client-Rechenvorrichtung bei dem ersten DNS-Server eines ersten Netz-Einwahlknotens, der einem "Content-Delivery-Network"-Dienstanbieter zugeordnet ist, wobei die DNS-Anfrage eines angeforderten Betriebsmittels entspricht, das einer originalen Betriebsmittel-Kennung zugeordnet ist, die von dem Inhaltsanbieter bereitgestellt wird, und wobei der erste DNS-Server einem "Content-Delivery-Network"-Dienst entspricht;
Erhalten einer Anfrage-IP-Adresse, die der DNS-Anfrage bei dem ersten DNS-Server zugeordnet ist;
Erhalten einer standortbezogenen Kennung, die der Anfrage-IP-Adresse zugeordnet ist, wobei die standortbezogene Kennung einem physikalischen oder logischen Standort entspricht, der der Client-Rechenvorrichtung zugeordnet ist;
Auswählen eines Netz-Einwählknotens, der dem "Content-Delivery-Network"-Dienstanbieter zugeordnet ist, basierend auf der standortbezogenen Kennung;
Bestimmen, ob der erste DNS-Server für die DNS-Anfrage maßgebend ist, basierend auf dem ausgewählten Netz-Einwählknoten; und
wenn der erste DNS-Knoten unmaßgeblich ist:
Erhalten einer alternativen Betriebsmittel-Kennung, basierend auf dem ausgewählten Netz-Einwählknoten, wobei die alternative Betriebsmittel-Kennung Informationen zum Veranlassen der DNS-Anfrage enthält, um eine Domain entsprechend dem ausgewählten Netz-Einwählknoten aufzulösen; und
Übertragen der alternativen Betriebsmittel-Kennung zu der Client-Rechenvorrichtung.

2. Verfahren nach Anspruch 1, das ferner das Bestimmen, durch den ersten DNS-Server, einer Ziel-Kennung umfasst, die der DNS-Anfrage zugeordnet ist, wobei das Auswählen eines Netz-Einwählknotens ferner auf der Ziel-Kennung basiert.

3. Verfahren nach Anspruch 2, wobei die Ziel-Kennung einem geografischen Gebiet entspricht, das einen Standort umschließt, der der standortbezogenen Kennung zugeordnet ist.

4. Verfahren nach Anspruch 2, das ferner das Überschreiben der bestimmten Ziel-Kennung basierend auf einer Identität des Inhaltsanbieters umfasst.

5. Verfahren nach Anspruch 2, das ferner das Überschreiben der bestimmten Ziel-Kennung basierend auf der originalen Betriebsmittel-Kennung umfasst, wobei die originale Betriebsmittel-Kennung Informationen bereitstellt, die einer alternativen Ziel-Kennung zugeordnet sind.

6. Verfahren nach Anspruch 2, wobei das Auswählen eines Netz-Einwählknotens das Auswählen eines Netz-Einwählknotens aus einer Menge von Netz-Einwählknoten umfasst, die in der Lage sind, Betriebsmittel-Anfragen, die der bestimmten Ziel-Kennung zugeordnet sind, zu bedienen.

7. Verfahren nach Anspruch 1, das ferner Folgendes umfasst:
Bestimmen, ob der ausgewählte Netz-Einwählknoten vor dem Bestimmen, ob der erste DNS-Server maßgebend für die DNS-Anfrage ist, zur Verfügung steht, basierend auf dem ausgewählten Netz-Einwählknoten;
wenn der ausgewählte Netz-Einwählknoten zur Verfügung steht, Beibehalten des ausgewählten Netz-Einwählknotens; und
wenn der ausgewählte Netz-Einwählknoten nicht zur Verfügung steht, Auswählen eines alternativen Einwählknotens.

8. Verfahren nach Anspruch 1, das ferner Folgendes umfasst:
wenn bestimmt wird, dass der erste DNS-Server maßgebend ist:
Auswählen einer Cache-Komponente zum Bereitstellen von Inhalt, der der originalen Betriebsmittel-Kennung zugeordnet ist; und
Übertragen von Informationen, die die ausgewählte Cache-Komponente identifizieren.

9. Verfahren nach einem der vorhergehenden Ansprüche, das ferner Folgendes umfasst:
an einem zweiten DNS-Server eines zweiten Netz-Einwählknotens, der einem "Content-Delivery-Network"-Dienstanbieter zugeordnet ist:
Empfangen einer folgenden DNS-Anfrage von einer Client-Rechenvorrichtung, wobei die folgende DNS-Anfrage eines angeforderten Betriebsmittels entspricht, das der alternativen Betriebsmittel-Kennung zugeordnet ist:
Auflösen der folgenden DNS-Anfrage, um eine Cache-Komponente zum Bereitstellen von Inhalt zu identifizieren, der der originalen Betriebsmittel-Anfrage zugeordnet ist; und
Übertragen von Informationen, die die identifizierte Cache-Komponente identifizieren, zu der Client-Rechenvorrichtung.

10. System für Anfrage-Routing, das Folgendes umfasst:
einen ersten Netz-Einwählknoten, der einem "Content-Delivery-Network"-Dienstanbieter zugeordnet ist, wobei der erste Netz-Einwählknoten eine DNS-Serverkomponente enthält, die eine DNS-Anfrage von einer Client-Rechenvorrichtung empfängt, wobei die DNS-Anfrage eines angeforderten Betriebsmittels entspricht, das einer ersten Betriebsmittel-Kennung zugeordnet ist, und wobei der DNS-Server in dem ersten Netz-Einwählknoten betrieben werden kann, um:
eine Anfrage-IP-Adresse, die der DNS-Anfrage an dem ersten DNS-Server zugeordnet ist, zu erhalten;
eine standortbezogene Kennung, die der Anfrage-IP-Adresse zugeordnet ist, zu erhalten, wobei die standortbezogene Kennung einem physikalischen oder logischen Standort entspricht, der der Client-Rechenvorrichtung zugeordnet ist;
einen Netz-Einwählknoten, der dem "Content-Delivery-Network"-Dienstanbieter zugeordnet ist, basierend auf der standortbezogenen Kennung auszuwählen;
zu bestimmen, ob der erste DNS-Server maßgebend für die DNS-Anfrage ist, basierend auf dem ausgewählten Netz-Einwählknoten; und
dann, wenn der erste DNS-Knoten unmaßgeblich ist:
basierend auf dem ausgewählten Netz-Einwählknoten eine alternative Betriebsmittel-Kennung zu erhalten, wobei die alternative Betriebsmittel-Kennung Informationen zum Veranlassen der DNS-Anfrage enthält, um eine Domain entsprechend dem ausgewählten Netz-Einwählknoten aufzulösen; und
die alternative Betriebsmittel-Kennung zu der Client-Rechenvorrichtung zu übertragen.

11. System nach Anspruch 10, wobei der DNS-Server in dem ersten Netz-Einwählknoten ferner betrieben werden kann, um eine Ziel-Kennung zu bestimmen, die der DNS-Anfrage zugeordnet ist, wobei das Auswählen eines Netz-Einwählknotens ferner auf der Ziel-Kennung basiert.

12. System nach Anspruch 10 oder Anspruch 11, wobei der DNS-Server in dem ersten Netz-Einwählknoten ferner betrieben werden kann, um:
zu bestimmen, ob der ausgewählte Netz-Einwählknoten vor dem Bestimmen, ob der erste DNS-Server maßgebend für die DNS-Anfrage ist, zur Verfügung steht, basierend auf dem ausgewählten Netz-Einwählknoten;
den ausgewählten Netz-Einwählknoten beizubehalten, wenn der ausgewählte Netz-Einwählknoten zur Verfügung steht; und
einen alternativen Einwählknoten auszuwählen, wenn der ausgewählte Netz-Einwählknoten nicht zur Verfügung steht.

13. System nach einem der Ansprüche 9 bis 12, das ferner Folgendes umfasst:
einen zweiten Netz-Einwählknoten, der einem "Content-Delivery-Network"-Dienstanbieter zugeordnet ist, wobei der zweite Netz-Einwählknoten eine DNS-Serverkomponente enthält, die eine folgende DNS-Anfrage von einer Client-Rechenvorrichtung empfängt, wobei die folgende DNS-Anfrage einem angeforderten Betriebsmittel entspricht, das der alternativen Betriebsmittel-Kennung zugeordnet ist, und wobei der DNS-Server in dem zweiten Netz-Einwählknoten betrieben werden kann, um:
die folgende DNS-Anfrage aufzulösen, um eine Cache-Komponente zum Bereitstellen von Inhalt zu identifizieren, der der originalen Betriebsmittel-Anfrage zugeordnet ist; und
Informationen, die die identifizierte Cache-Komponente identifizieren, zu der Client-Rechenvorrichtung zu übertragen.

## Revendications

1. Procédé exécuté par un premier serveur DNS dans un premier point de présence en réseau, comprenant les étapes consistant à :
obtenir une interrogation DNS provenant d'un dispositif informatique client au niveau du premier serveur DNS d'un premier point de présence en réseau associé à un fournisseur de services réseau de fourniture de contenu, l'interrogation DNS correspondant à une ressource demandée associée à un identifiant de ressource original fourni par le fournisseur de contenu, et le premier serveur DNS correspondant à un service réseau de fourniture de contenu ;
obtenir une adresse IP d'interrogation associée à l'interrogation DNS au niveau du premier serveur DNS ;
obtenir un identifiant basé sur l'emplacement associé à l'adresse IP d'interrogation, l'identifiant basé sur l'emplacement correspondant à un emplacement physique ou logique associé au dispositif informatique client ;
sélectionner un point de présence en réseau associé au fournisseur de services réseau de fourniture de contenu d'après l'identifiant basé sur l'emplacement ;
déterminer si le premier serveur DNS fait autorité pour l'interrogation DNS d'après le point de présence en réseau sélectionné ; et
si le premier serveur DNS ne fait pas autorité ;
obtenir un autre identifiant de ressource d'après le point de présence en réseau sélectionné, ledit autre identifiant de ressource contenant des informations servant à amener une interrogation DNS à se résoudre vers un domaine correspondant au point de présence en réseau sélectionné ; et
envoyer ledit autre identifiant de ressource au dispositif informatique client.

2. Procédé selon la revendication 1, comprenant également l'étape consistant à déterminer, par le premier serveur DNS, un identifiant de destination associé à l'interrogation DNS, la sélection d'un point de présence en réseau étant également basée sur l'identifiant de destination.

3. Procédé selon la revendication 2, dans lequel l'identifiant de destination correspond à une région géographique englobant un emplacement associé à l'identifiant basé sur l'emplacement.

4. Procédé selon la revendication 2, comprenant également l'étape consistant à annuler l'identifiant de destination déterminé en fonction d'une identité du fournisseur de contenu.

5. Procédé selon la revendication 2, comprenant également l'étape consistant à annuler l'identifiant de destination déterminé en fonction de l'identifiant de ressource original, l'identifiant de ressource original fournissant des informations associées à un autre identifiant de destination.

6. Procédé selon la revendication 2, dans lequel l'étape consistant à sélectionner un point de présence en réseau consiste à sélectionner un point de présence en réseau dans un ensemble de points de présence en réseau capables de traiter des demandes de ressource associées à l'identifiant de destination déterminé.

7. Procédé selon la revendication 1, comprenant également les étapes consistant à :
déterminer si le point de présence en réseau sélectionné est disponible avant de déterminer si le premier serveur DNS fait autorité pour l'interrogation DNS d'après le point de présence en réseau sélectionné ; et
si le point de présence en réseau sélectionné est disponible, maintenir le point de présence en réseau sélectionné ; et
si le point de présence en réseau sélectionné n'est pas disponible, sélectionner un autre point de présence en réseau.

8. Procédé selon la revendication 1, comprenant également les étapes consistant à :
s'il est déterminé que le premier serveur DNS fait autorité ;
sélectionner un composant d'antémémoire pour fournir un contenu associé à la demande de ressource originale ; et
envoyer les informations qui identifient le composant d'antémémoire sélectionné.

9. Procédé selon l'une quelconque des revendications précédentes, comprenant également les étapes consistant à :
au niveau d'un deuxième serveur DNS d'un deuxième point de présence en réseau associé à un fournisseur de services réseau de fourniture de contenu :
recevoir une interrogation DNS suivante en provenance d'un dispositif informatique client, l'interrogation DNS suivante correspondant à une ressource demandée associée audit autre identifiant de ressource ;
résoudre l'interrogation DNS suivante pour identifier un composant d'antémémoire servant à fournir un contenu associé à la demande de ressource originale ; et
envoyer les informations qui identifient le composant d'antémémoire identifié au dispositif informatique client.

10. Système de demande d'acheminement, comprenant :
un premier point de présence en réseau associé à un fournisseur de services réseau de fourniture de contenu, le premier point de présence en réseau contenant un composant de serveur DNS qui reçoit une interrogation DNS d'un dispositif informatique client, l'interrogation DNS correspondant à une ressource demandée associée à un premier identifiant de ressource, et le premier serveur DNS du premier point de présence en réseau étant capable de :
obtenir une adresse IP d'interrogation associée à l'interrogation DNS au niveau du premier serveur DNS ;
obtenir un identifiant basé sur l'emplacement associé à l'adresse IP d'interrogation, l'identifiant basé sur l'emplacement correspondant à un emplacement physique ou logique associé au dispositif informatique client ;
sélectionner un point de présence en réseau associé au fournisseur de services réseau de fourniture de contenu d'après l'identifiant basé sur l'emplacement ;
déterminer si le premier serveur DNS fait autorité pour l'interrogation DNS d'après le point de présence en réseau sélectionné ; et
si le premier serveur DNS ne fait pas autorité ;
obtenir un autre identifiant de ressource d'après le point de présence en réseau sélectionné, ledit autre identifiant de ressource contenant des informations servant à amener une interrogation DNS à se résoudre vers un domaine correspondant au point de présence en réseau sélectionné ; et
envoyer ledit autre identifiant de ressource au dispositif informatique client.

11. Système selon la revendication 10, dans lequel le serveur DNS du premier point de présence en réseau est également capable de déterminer un identifiant de destination associé à l'interrogation DNS, la sélection d'un point de présence en réseau étant également basée sur l'identifiant de destination.

12. Système selon la revendication 10 ou 11, dans lequel le serveur DNS du premier point de présence en réseau est également capable de :
déterminer si le point de présence en réseau sélectionné est disponible avant de déterminer si le premier serveur DNS fait autorité pour l'interrogation DNS d'après le point de présence en réseau sélectionné ; et
maintenir le point de présence en réseau sélectionné si le point de présence en réseau sélectionné est disponible ; et
sélectionner un autre point de présence en réseau si le point de présence en réseau sélectionné n'est pas disponible.

13. Système selon l'une quelconque des revendications 9 à 12, comprenant également :
un deuxième point de présence en réseau associé à un fournisseur de services réseau de fourniture de contenu, le deuxième point de présence en réseau contenant un composant de serveur DNS qui reçoit une interrogation DNS suivante en provenance d'un dispositif informatique client, l'interrogation DNS suivante correspondant à une ressource demandée associée audit autre identifiant de ressource, et le serveur DNS du deuxième point de présence en réseau étant capable de :
résoudre l'interrogation DNS suivante pour identifier un composant d'antémémoire servant à fournir un contenu associé à la demande de ressource originale ; et
envoyer les informations qui identifient le composant d'antémémoire identifié au dispositif informatique client.
